# EUROPEAN PATENT APPLICATION

(11) **EP 4 332 865 A1**
(43) Date of publication of application: **06.03.2024**
(21) Application number: 22865066.9
(22) Date of filing: 01.09.2022
(51) Int. Cl.: G06Q 30/02, G06N 3/08, G06N 7/00, H04W 4/02, G06F 16/29, G06Q 50/10, G06T 11/20, G06N 3/04

(54) **SERVER AND CONTROL METHOD THEREOF**

(30) Priority: 02.09.2021 KR 20210117237; 07.09.2021 KR 20210119326; 23.11.2021 KR 20210162776; 23.02.2022 KR 20220023861
(71) Applicant: Samsung Electronics Co., Ltd., Suwon-si, Gyeonggi-do 16677 (KR)
(72) Inventor: JEONG, Sihyun, Suwon-si, Gyeonggi-do 16677 (KR); SUH, Ilhyun, Suwon-si, Gyeonggi-do 16677 (KR); CHA, Kihoon, Suwon-si, Gyeonggi-do 16677 (KR); OH, Byungkook, Suwon-si, Gyeonggi-do 16677 (KR); KIM, Junbeom, Suwon-si, Gyeonggi-do 16677 (KR); PARK, Goeon, Suwon-si, Gyeonggi-do 16677 (KR)
(74) Representative: Appleyard Lees IP LLP
(86) International application number: PCT/KR2022/013113
(87) International publication number: WO 2023/033564

(57) **Abstract**

A server, a method for controlling thereof, and a method for controlling an electronic apparatus are provided. The method for controlling the server according to an embodiment includes: obtaining road information in a region having a predetermined range and information on a plurality of places in the region; obtaining a region mobility graph corresponding to the region, based on movement information of at least one user between the plurality of places, the region mobility graph including a plurality of nodes corresponding to the plurality of places and an edge connecting the plurality of nodes; learning the region mobility graph, by using a graph convolutional network (GCN) model for predicting a relationship between the plurality of nodes in the region mobility graph; and providing the learned region mobility graph to an external apparatus.

## Description

### [Technical Field]

Embodiments of the disclosure relate to a server and a control method thereof, and more particularly to a server which obtains a region mobility graph obtained by predicting movement between places corresponding to a predetermined range of region, and a control method thereof.

### [Background Art]

Along with recent development of user devices, needs for providing content (e.g., advertisement) to the user devices are increasing.

In the related art, technologies for providing content (e.g., advertisement) to a user device located within a region designated by a user to provide the content using geofencing technology are utilized. The word 'geofencing' is a combination of geographic and fencing and refers to a technology for setting a boundary based on a location information solution. The geofencing technology is used to notify that a user device is located in a specific location or leave the specific location, and tracks the location of the user device to notify it to another user.

However, in the related art, there is inconvenience that the user who wants to provide advertisement needs to directly set the region to be advertised. In addition, in the related art, there is a problem that a region around a place for providing the advertisement has to be simply set as a region to be advertised.

### [Disclosure]

### [Technical Solution]

The disclosure is made in view of the above problems and an object of the disclosure is to provide a server for obtaining a graph for predicting a region having a high possibility that a user moves to a place for providing advertisement and a method for controlling thereof.

According to an aspect of an example embodiment, provided is a method for controlling a server, the method including: obtaining road information in a region having a predetermined range and information on a plurality of places in the region; obtaining a region mobility graph corresponding to the region, based on movement information of at least one user between the plurality of places, the region mobility graph including a plurality of nodes corresponding to the plurality of places and an edge connecting the plurality of nodes; learning the region mobility graph, by using a graph convolutional network (GCN) model for predicting a relationship between the plurality of nodes in the region mobility graph; and providing the learned region mobility graph to an external apparatus.

The control method may further include: obtaining a place mobility graph corresponding to the region, the place mobility graph including a plurality of first nodes corresponding to the plurality of places, respectively, and a first edge connecting the plurality of nodes, the place mobility graph further including the movement information of the at least one user between the plurality of places; obtaining a road network graph including a plurality of second nodes corresponding to intersections and a second edge connecting the plurality of second nodes, based on the road information in the region; and obtaining the region mobility graph based on the place mobility graph and the road network graph.

The obtaining the region mobility graph may include: identifying, as a node of the region mobility graph, an area defined by the plurality of second nodes and the second edge of the road network graph; and identifying, as an edge of the region mobility graph, movement information of the at least one user between a plurality of identified nodes and information on a physical distance between the plurality of identified nodes.

Each of the plurality of nodes may include information on a place, with respect to at least one place located in an area corresponding to each of the plurality of nodes, as feature information, and the information on the place may include location information of the place and category information corresponding to the place.

The obtaining the region mobility graph may include: identifying, as a node of the region mobility graph, the plurality of second nodes of the road network graph; and identifying, as an edge of the region mobility graph, movement information of the at least one user between a plurality of identified nodes and information on a physical distance between the plurality of identified nodes.

Each of the plurality of identified nodes may include information on a place, with respect to at least one place related to a location corresponding to each of the plurality of identified nodes, as feature information.

The learning may include obtaining an embedding vector for predicting an edge included in the region mobility graph by learning the region mobility graph through the GCN model.

The obtaining the embedding vector may include obtaining the embedding vector by learning the region mobility graph by giving a weight to a physical distance between the plurality of nodes of the region mobility graph.

According to an aspect of an example embodiment, provided is a server including: a memory including at least one instruction; and a processor configured to, by executing the at least one instruction: obtain road information in a region having a predetermined range and information on a plurality of places in the region; obtain a region mobility graph corresponding to the region, based on movement information of at least one user between the plurality of places, the region mobility graph including a plurality of nodes corresponding to the plurality of places and an edge connecting the plurality of nodes; learn the region mobility graph, by using a graph convolutional network (GCN) model for predicting a relationship between the plurality of nodes in the region mobility graph; and provide the learned region mobility graph to an external apparatus.

The processor may be further configured to: obtain a place mobility graph corresponding to the region, the place mobility graph including a plurality of first nodes corresponding to the plurality of places, respectively, and a first edge connecting the plurality of nodes, the place mobility graph further including the movement information of the at least one user between the plurality of places; obtain a road network graph including a plurality of second nodes corresponding to intersections and a second edge connecting the plurality of second nodes, based on the road information in the region; and obtain the region mobility graph based on the place mobility graph and the road network graph.

The processor may be further configured to: identify, as a node of the region mobility graph, an area defined by the plurality of second nodes and the second edge of the road network graph; and identify, as an edge of the region mobility graph, the movement information of the at least one user between a plurality of identified nodes and information on a physical distance between the plurality of identified nodes.

Each of the plurality of identified nodes may include information on a place, with respect to at least one place located in an area corresponding to each of the plurality of identified nodes, as feature information, and the information on the place may include location information of the place and category information corresponding to the place.

The processor may be further configured to: identify, as a node of the region mobility graph, the plurality of second nodes of the road network graph; and identify, as an edge of the region mobility graph, movement information of the at least one user between a plurality of identified nodes and information on a physical distance between the plurality of identified nodes.

Each of the plurality of identified nodes may include information on a place, with respect to at least one place related to a location corresponding to each of the plurality of identified nodes, as feature information.

The processor may be further configured to obtain an embedding vector for predicting an edge included in the region mobility graph by learning the region mobility graph through the GCN model.

According to an aspect of an example embodiment, there is provided a method for controlling an electronic apparatus including: based on a user request for providing an advertisement for a predetermined range of region being received, obtaining a region mobility graph including information on the predetermined range of region from an external server; identifying at least another node from which at least one user is predicted to move to a node corresponding to the user request among a plurality of nodes in the region mobility graph based on the obtained region mobility graph; and identifying an advertisement area for providing an advertisement corresponding to the user request in the predetermined range of region based on the at least another identified node.

The identifying the at least another node may include identifying a first number of nodes corresponding to a location with a high probability of visiting to a place corresponding to the user request in the predetermined range of region among the plurality of nodes included in the region mobility graph.

The identifying the advertisement area may include identifying a first area corresponding to the first number of identified nodes in the predetermined range of region as the advertisement area.

The control method may further include displaying information on the identified advertisement area and additional information corresponding to the identified advertisement area.

The control method may further include, based on a user input for changing an advertisement area based on the displayed information being received, identifying a second number of nodes corresponding to a location with a high probability of visiting to a place corresponding to the user request in the predetermined range of region among the plurality of nodes included in the region mobility graph; identifying a second area corresponding to the second number of identified nodes in the predetermined range of region as the advertisement area; and displaying information on the identified advertisement area and additional information corresponding to the identified advertisement area.

### [Description of Drawings]

FIG. 1 is a diagram illustrating an operation between a server and an electronic apparatus according to an embodiment;
FIG. 2 is a diagram illustrating obtaining a region mobility graph using a location mobility graph and a road network graph according to an embodiment;
FIG. 3A is a diagram illustrating a place mobility graph according to an embodiment;
FIG. 3B is a graph illustrating a road network graph according to an embodiment;
FIG. 4A is a graph illustrating a region mobility graph according to an embodiment;
FIG. 4B is a graph illustrating a region mobility graph according to another embodiment;
FIG. 5 is a block diagram of a server 100 according to an embodiment;
FIG. 6 is a block diagram of an electronic apparatus 200 according to an embodiment;
FIG. 7 is a block diagram of a user device 300 according to an embodiment;
FIG. 8 is a diagram illustrating region mobility graphs different for each time zone according to an embodiment;
FIG. 9 is a diagram illustrating an advertisement area for providing advertisement corresponding to a request of a user of an electronic apparatus in a predetermined range of region according to an embodiment;
FIG. 10A is a diagram illustrating an example of identifying an advertisement area for providing advertisement corresponding to a request of a user of an electronic apparatus in a predetermined range of region according to an embodiment;
FIG. 10B is a diagram illustrating an example of identifying an advertisement area for providing advertisement corresponding to a request of a user of an electronic apparatus in a predetermined range of region according to an embodiment;
FIG. 11 is a flowchart illustrating operations between a server and an electronic apparatus according to an embodiment;
FIG. 12 is a flowchart illustrating operations between an electronic apparatus and a user device according to an embodiment;
FIG. 13 is a flowchart illustrating a method for controlling a server 100 according to an embodiment;
FIG. 14 is a flowchart illustrating a method for controlling an electronic apparatus 200 according to an embodiment;
FIG. 15A is a diagram illustrating user check-in information for obtaining a place mobility graph obtained by further considering prediction time according to an embodiment;
FIG. 15B is a diagram illustrating a User-Pol graph for obtaining a place mobility graph obtained by further considering prediction time according to an embodiment;
FIG. 15C is a diagram illustrating a point of interest (PoI)-PoI graph for obtaining a place mobility graph obtained by further considering prediction time according to an embodiment;
FIG. 16 is a diagram illustrating a pre-training technology for performance improvement of location-based service (LBS) according to an embodiment;
FIG. 17A is a diagram illustrating pivot-based ordered PoI information used in a masked language modeling model; and
FIG. 17B is a diagram illustrating a geolocation network used in a contrastive objectives model.

### [Mode for Invention]

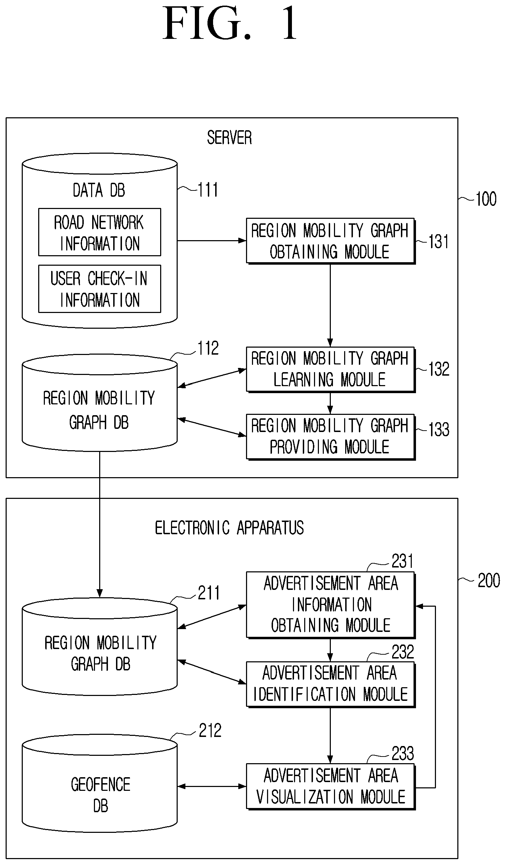

FIG. 1 is a diagram illustrating an operation between a server and an electronic apparatus according to an embodiment.

Hereinafter, main terms related to the disclosure will be briefly described and embodiments according to the disclosure will be described with reference to FIG. 1.

A "server 100" according to the disclosure refers to a constituent element which obtains a first graph (hereinafter, referred to as a place mobility graph) and a second graph (hereinafter, referred to as a road network graph), and obtain a third graph (hereinafter, referred to as a region mobility graph) obtained by predicting movement between places corresponding to a predetermined range of region based on the obtained place mobility graph and the road network graph.

Here, the predetermined range of region may refer to an area for providing advertisement. The place (or spot) may refer to a target (e.g., store, shop, or the like) for providing the advertisement within the predetermined range of region. In an example, the predetermined range of region may be Gangnam-ku (a district of Seoul, South Korea) and the place may be any one café located in Gangnam-ku.

Specifically, the server 100 may obtain road information in the predetermined range of region and information of a plurality of places in the predetermined range of region, and obtain the region mobility graph corresponding to the predetermined range of region including a plurality of nodes and edges connecting the plurality of nodes based on movement information between the plurality of places. In addition, the region mobility graph may be learned through a neural network model (e.g., graph convolutional network model). Further, the server 100 may provide the learned region mobility graph to an electronic apparatus 200.

The "electronic apparatus 200" according to the disclosure may refer to a constituent element which identifies an advertisement area (e.g., an area in which user terminals located therein receive advertisement) for providing advertisement corresponding to a user's request using a region mobility graph obtained through the server 100. Specifically, the electronic apparatus 200 may obtain the region mobility graph including information on the predetermined range of region from the server 100, and when a user's request for providing the advertisement for the predetermined range of region is received, the electronic apparatus 200 may identify at least another node from which another user (or a user terminal) is predicted to move to a node corresponding to the user's request among the plurality of nodes in the region mobility graph based on the obtained region mobility graph. In addition, the electronic apparatus 200 may identify the advertisement area for providing the advertisement corresponding to the user's request in the predetermined range of region based on the at least another identified node. The electronic apparatus 200 according to the disclosure may be particularly implemented as a server, but the type of the electronic apparatus is not particularly limited.

The "advertisement area" according to the disclosure may refer to a region range for providing the advertisement according to the user's request received from the electronic apparatus 200. In other words, when the advertisement area is set by the electronic apparatus 200, the advertisement corresponding to the user's request may be provided on a plurality of user terminal devices located in the corresponding advertisement area according to a predetermined condition.

Referring to FIG. 1, the server 100 may include a region mobility graph obtaining module 131, a region mobility graph learning module 132, and a region mobility graph providing module 133. In addition, the server 100 may obtain a region mobility graph corresponding to the predetermined range of region through the region mobility graph obtaining module 131, the region mobility graph learning module 132, and the region mobility graph providing module 133.

According to the disclosure, the region mobility graph obtaining module 131 may obtain a place mobility graph and a road network graph using pieces of information included in a data DB 111, and obtain the region mobility graph by predicting movement of a target user (e.g., a target to receive advertisement) between places corresponding to the predetermined range of region based on the obtained place mobility graph and the road network graph. In the following descriptions, for description purposes, a entity that requests to provide the advertisement is described as a `user' and an entity that is the target to receive the advertisement is described as a 'target user'. The term `target user' may include a plurality of target users to receive the advertisement.

Specifically, the region mobility graph obtaining module 131 may obtain the place mobility graph based on user check-in information included in the data DB 111. Here, the user check-in information may include information on a visit history between a previous place and a next place visited by the user within the predetermined range of region. In an example, when the user moved from a store A to a store B on a specific date, the user check-in information may include information on the store A, information on the store B, information indicating that the user moved from the store A to the store B. In addition, the user may include various users according to a method for collecting the user check-in information. In an example, the user check-in information may be obtained from an external data management server or obtained based on usage history information of a specific electronic apparatus.

In addition, the place mobility graph according to the disclosure is a graph in which each of a plurality of places in the predetermined range of region is configured as a node and a node corresponding to a previous visit place and a node corresponding to a next visit place are connected to each other with an edge based on a visit history of the previous visit place (node) and the next visit place (node) of a specific user. In an example, the node may include information on a place corresponding to the node, the information on the place may include location information of the place and category information corresponding to the place, and in an embodiment, further include usage history information indicating that the user visited the corresponding place. The category information may refer to a type corresponding to the place, and in an embodiment, may include category information classified as "café", "restaurant", "karaoke", and "store". In addition, in an embodiment, the category information may include category information classified more specifically as a store name belonging to "café", a type of product selling in the "store", and the like. However, the disclosure is not limited thereto and the category may be classified by various methods. In an example, based on the user check-in information indicating that the specific user moved from the store A to the store B, the region mobility graph obtaining module 131 may obtain the place mobility graph including an edge connected from a node corresponding to the store A to a node corresponding to the store B.

In addition, the region mobility graph obtaining module 131 may obtain the road network graph based on road network information included in the data DB 111. Here, the road network information may include road information and intersection information between the roads in the predetermined range of region.

The road network graph according to the disclosure is a graph in which an intersection in the predetermined range of region is configured as a node and roads between the intersections (nodes) are connected to each other with edges.

When the place mobility graph and the road network graph are obtained, the region mobility graph obtaining module 131 may obtain a region mobility graph corresponding to the predetermined range of region based on the place mobility graph and the road network graph.

The region mobility graph according to the disclosure is a mobility graph for predicting the movement of the target user between places in the predetermined range of region. Specifically, the region mobility graph is a graph in which each of areas divided from the predetermined range of region is configured with a node and two nodes corresponding to the movement (or predicted movement) of the target user are connected to each other with an edge. Here, each of the areas divided from the predetermined range of region is one area configured with (or defined by) nodes and edges of the road network graph, but is not limited thereto, and may be an area corresponding to one node of the road network graph, and this will be described later in detail.

Here, each of the nodes of the region mobility graph may include information on a plurality of places included in an area corresponding to the corresponding node as feature information. In addition, the edge may include movement information between two nodes connected with the edge (e.g., information on number of times of movement between identified nodes in each category) and information on a physical distance between identified nodes. That is, each of the nodes of the place mobility graph is a node corresponding to each place in the predetermined range of region, whereas each of the nodes of the region mobility graph may be a node corresponding to an area divided from the predetermined range of region by a predetermined condition. In addition, the edge of the place mobility graph connects two places in a predetermined region, whereas the edge of the region mobility graph may connect two nodes including two places, respectively. In an embodiment, the region mobility graph obtaining module 131 may identify one area configured with a node and an edge of the road network graph as one node of the region mobility graph. In addition, the region mobility graph obtaining module 131 may include information on a place corresponding to at least one place located in the area corresponding to the identified node as feature information of the corresponding node. That is, the node of the region mobility graph may include information on a place, with respect to a plurality of places located in an area corresponding to the node, as feature information of the corresponding node. In an example, the feature information may include information on category distribution, corresponding to a plurality of places located in the area corresponding to the corresponding node, as feature information.

In another embodiment, the region mobility graph obtaining module 131 may identify a node of the road network graph as a node of the region mobility graph. In this case, the region mobility graph obtaining module 131 may include information on a place, with respect to at least one place related to the location corresponding to each of the plurality of identified nodes, as feature information of the corresponding node. That is, the region mobility graph obtaining module 131 may include information on the place, with respect to at least one place near the location corresponding to the identified node, among a plurality of places near the location corresponding to the identified node, as the feature information of the corresponding node.

In addition, the region mobility graph obtaining module 131 may configure movement information between the identified nodes (e.g., information on number of times of movement between the identified nodes in each category) and information on a physical distance between the identified nodes as edges of the region mobility graph. In an example, a plurality of edges may be formed between two nodes of the region mobility graph according to the type of category. For example, it is assumed that specific users moved from a place corresponding to a "restaurant" category located at a first node in a mobility graph to a place corresponding to a "café" category located at a second node five times and moved from the place corresponding to the "café" category located at the second node to a place corresponding to a "karaoke" category located at the first node three times, and a distance between a center location of the first node to a center location of the second node is 500 m. In this case, the region mobility graph obtaining module 131 may configure a first edge corresponding to "information indicating that the users moved from the first node to the second node, that is, from the restaurant to the café five times; a second edge corresponding to "information indicating that the users moved from the second node to the first node, that is, from the café to the karaoke three times; and a third edge corresponding to "information indicating that the distance between the first node and the second node is 500 m" as edges between the first node and the second node of the region mobility graph.

According to the disclosure, the region mobility graph learning module 132 may learn the region mobility graph obtained by the region mobility graph obtaining module 131 using a neural network model.

The region mobility graph learning module 132 may learn a region mobility graph through a graph convolutional network (GCN) model for predicting a relationship between nodes in the graph. The graph convolutional network (GCN) model is a neural network model which performs learning using a graph configured with nodes and edges as an input and is a neural network model in which a convolution concept of a convolutional neural network (CNN) is introduced to a graph network. The region mobility graph learning module 132 may obtain an embedding vector by learning the region mobility graph by a self-supervised method through the GCN model. Specifically, the region mobility graph learning module 132 may obtain an embedding vector for predicting the number of times of movement of the target user to a specific category between the plurality of nodes by learning the region mobility graph based on a plurality of nodes, feature information included in the plurality of nodes, and edges connecting the plurality of nodes included in the region mobility graph through the GCN model. In other words, the region mobility graph learning module 132 may obtain an embedding vector capable of predicting a final edge between the plurality of nodes included in the region mobility graph by learning a region mobility graph before learning through the GCN model. In other words, the embedding vector may include information for predicting the number of times of movement between nodes included in the region mobility graph in each category, and when the learning through the GCN model is completed, the embedding vector of each of the plurality of nodes included in the region mobility graph may be obtained.

In an embodiment, the region mobility graph learning module 132 may obtain the embedding vector by learning the region mobility graph by repeating a process of propagating the feature information included in each node of the region mobility graph to a node connected to the corresponding node with an edge, aggregating, and passing a fully connected layer included in the GCN mode.

In an embodiment, the region mobility graph learning module 132 may obtain the embedding vector of each of the plurality of nodes in consideration of an actual physical distance corresponding to each of the nodes included in the region mobility graph. In other words, the region mobility graph learning module 132 may learn the region mobility graph by giving weight to the physical distance corresponding to the plurality of nodes of the region mobility graph. In an example, the region mobility graph learning module 132 may obtain the embedding vector by learning the region mobility graph to give more weight (importance) to movement between two nodes with a long actual physical distance by using a distance-aware edge weight compensation method for correcting information on the number of times of movement included in an edge between two nodes with a long physical distance corresponding to the nodes of the region mobility graph to at least one of a specific function and variable. In another example, the region mobility graph learning module 132 may obtain the embedding vector by learning the region mobility graph to give more weight to the movement between two nodes with a long actual physical distance by using a distance-based embedding regularization method for giving weight of a distance between embedding vector values to a loss function when learning the region mobility graph through the GCN model according to the actual physical distance between two nodes.

According to the disclosure, the region mobility graph providing module 133 may provide the region mobility graph learned through the region mobility graph learning module 132 to an external apparatus.

When the embedding vector of the region mobility graph is obtained through the region mobility graph learning module 132, the region mobility graph providing module 133 may store information on the learned region mobility graph corresponding to the predetermined range of region in a region mobility graph DB 112. In an example, the region mobility graph providing module 133 may store the embedding vector obtained through the learning in the region mobility graph DB 112 together with the nodes of the region mobility graph. However, there is no limitation thereto, and the region mobility graph providing module 133 may store information on parameters of the GCN model used in the learning of the region mobility graph in the region mobility graph DB 112 together with the embedding vector and the nodes of the region mobility graph.

In addition, when the server 100 receives a request for the region mobility graph from the external electronic apparatus 200, the region mobility graph providing module 133 may transmit information on the region mobility graph corresponding to a user request stored in the region mobility graph DB 112 to the electronic apparatus 200.

Further, the electronic apparatus 200 may identify an advertisement area for providing advertisement corresponding to the user request of the electronic apparatus 200 based on the information on the region mobility graph obtained from the server 100.

Referring to FIG. 1, the electronic apparatus 200 may include an advertisement area information obtaining module 231, an advertisement area identification module 232, and an advertisement area visualization module 233. In addition, the electronic apparatus 200 may identify the advertisement area for providing the advertisement corresponding to the user request through the advertisement area information obtaining module 231, the advertisement area identification module 232, and the advertisement area visualization module 233.

According to the disclosure, the advertisement area information obtaining module 231 may obtain information used to identify the advertisement area corresponding to the user request of the electronic apparatus 200.

The advertisement area information obtaining module 231 may receive a user request for providing the advertisement. Here, the user request for providing the advertisement may include information on a place to be advertised, and the information on the place may include location information of the place and category information of the place. However, the disclosure is not limited thereto, and the information on the place may further include information to be used to set the advertisement area (e.g., information on advertisement cost, information on a target, information on trigger condition for providing advertisement, and the like).

In addition, the advertisement area information obtaining module 231 may obtain information on the region mobility graph for the predetermined range of region corresponding to the place to be advertised by the user. Specifically, the advertisement area information obtaining module 231 may request the information on the region mobility graph for the predetermined range of region corresponding to the place to be advertised to the server 100, receive the information on the region mobility graph from the server 100, and store the information in a region mobility graph DB 211. Here, the information on the region mobility graph may include the embedding vector corresponding to the region mobility graph and the nodes included in the region mobility graph. However, there is no limitation thereto, and the information on the region mobility graph may further include information on parameters of the GCN model used in the learning of the region mobility graph.

In addition, the advertisement area information obtaining module 231 may identify a node corresponding to a location from which the target user has a high probability of visiting to the place corresponding to the user request among the plurality of nodes included in the region mobility graph by using the information on the region mobility graph obtained from the server 100 and the information on the place to be advertised by the user. Specifically, the advertisement area information obtaining module 231 may identify a node corresponding to the user request from the region mobility graph, that is, at least second node from which the target user is predicted to move to a first node including the place corresponding to the user request, by using the embedding vector included in the information on the region mobility graph.

In an embodiment of the disclosure, the advertisement area information obtaining module 231 may identify a plurality of nodes from which the target user is predicted to move to the first node corresponding to the user request from the region mobility graph, and identify a predetermined number of at least one second node among the plurality of nodes. In an example, the advertisement area information obtaining module 231 may identify a probability of the target user visiting the first node by predicting the movement of the target user from each of the plurality of identified nodes to the first node. In addition, the advertisement area information obtaining module 231 may identify a predetermined number (k) of at least one second node with a high probability of the target user visiting the first node by predicting the movement of the target user to the first node among the plurality of nodes. Here, the predetermined number (k) may be set by the user or may be optimized by various variables of an actual size of the region corresponding to the node, cost of advertisement intended by the user, and the like.

The advertisement area identification module 232 may identify the advertisement area for providing the advertisement corresponding to the user request based on the at least one second node identified by the advertisement area information obtaining module 231.

The advertisement area identification module 232 may identify an area corresponding to the at least one second node in the predetermined range of region. In an example, the advertisement area identification module 232 may identify the area corresponding to the at least one second node from the road network graph corresponding to the predetermined range of region or a map corresponding to the predetermined range of region. In addition, the advertisement area identification module 232 may perform a polygon process for combining the areas corresponding to the at least one second node. In an example, the advertisement area identification module 232 may perform area interpolation for the areas corresponding to the at least one second node which are apart from each other in the road network graph corresponding to the predetermined range of region or the map corresponding to the predetermined range of region, and identify the area corresponding to the at least one second node from the road network graph or the map corresponding to the predetermined range of region.

The advertisement area visualization module 233 may visualize and provide the area corresponding to the at least one second node identified by the advertisement area identification module 232.

Specifically, the advertisement area visualization module 233 may visualize and display the advertisement area for providing the advertisement corresponding to the user request on the road network graph corresponding to the predetermined range of region or the map corresponding to the predetermined range of region based on the at least one identified second node. In addition, in an embodiment, the advertisement area visualization module 233 may additionally provide additional information corresponding to the corresponding advertisement area to the user together with the displayed advertisement area. Here, the additional information corresponding to the advertisement area may include information obtained by predicting cost that may occur when providing the advertisement in the displayed advertisement area and area information corresponding to each of the at least one second node in the displayed advertisement area. Here, the area information corresponding to each of the at least one second node may include various pieces of information such as category information corresponding to each of the at least one second node, information on a probability obtained by predicting movement of the target user to a place corresponding to the user request from the area corresponding to the at least one second node, and the like.

In an embodiment, the advertisement area visualization module 233 may receive a user input for providing the advertisement based on the displayed advertisement area. When the user input for providing the advertisement is received, the advertisement area visualization module 233 may store the area information for the advertisement area corresponding to the user request, the information on the place to be advertised by the user, and the additional information corresponding to the advertisement area in a geofence DB 212. However, there is no limitation thereto, and the advertisement area visualization module 233 may store various pieces of information for providing the advertisement corresponding to the user request in the geofence DB 212. In addition, the advertisement corresponding to the user request may be provided to an external apparatus that is located in the range of the region corresponding to the user request and satisfies a specific trigger condition based on the geofence DB 212.

In an embodiment, the advertisement area visualization module 233 may receive a user input for changing the advertisement area based on the displayed advertisement area. In an example, the advertisement area visualization module 233 may receive a user input for expanding the advertisement area or a user input for reducing the advertisement area based on the displayed advertisement area. In an example, the advertisement area visualization module 233 may receive a user input for changing at least one of the information on the advertisement cost, the information on the target, and the information on the trigger condition for providing the advertisement based on the displayed advertisement area.

In addition, the advertisement area visualization module 233 may provide the information for changing the advertisement area to the advertisement area information obtaining module 231 based on the received user input. In addition, the advertisement area information obtaining module 231 may obtain information to be used to identify the advertisement area corresponding to the user request and provide the information to the advertisement area identification module 232 based on the information for changing the advertisement area obtained from the advertisement area visualization module 233.

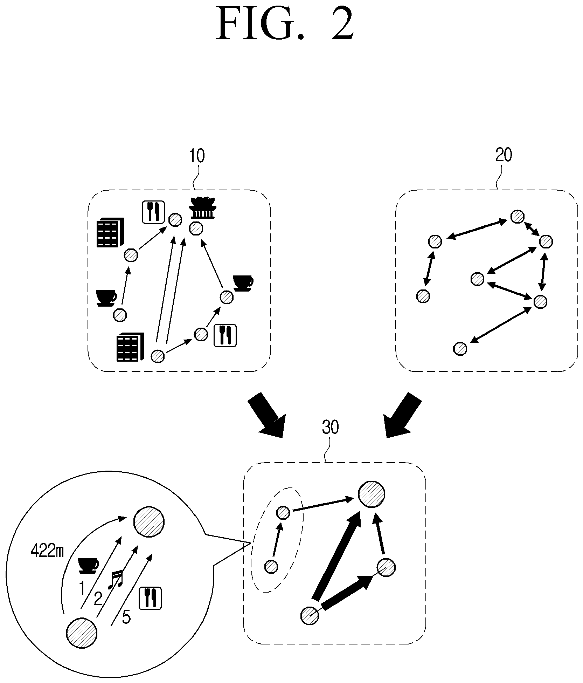

FIG. 2 is a diagram illustrating an embodiment of obtaining the region mobility graph using the location mobility graph and the road network graph according to an embodiment.

The server 100 may obtain a place mobility graph 10 and a road network graph 20 corresponding to the predetermined range of region.

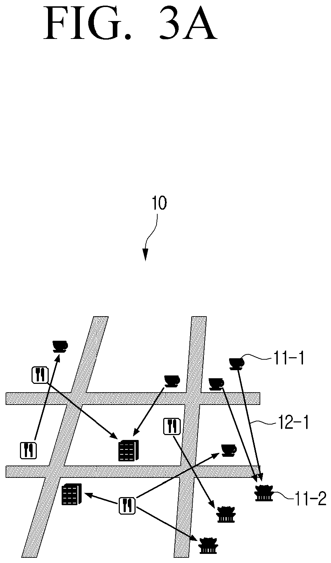

The place mobility graph 10 may include information on a visit history between a previous place and a next place visited by a plurality of users within the predetermined range of region based on the user check-in information of the plurality of users. Specifically, the place mobility graph 10 is a graph in which each of a plurality of places in the predetermined range of region is configured as a node, and a node corresponding to a previous visit place and a node corresponding to a next visit place are connected to each other with an edge based on the visit history of the previous visit place (node) and the next visit place (node) of a specific user. In an example, the place mobility graph 10 may be referred to as the place mobility graph. The place mobility graph 10 will be described in detail with reference to FIG. 3A.

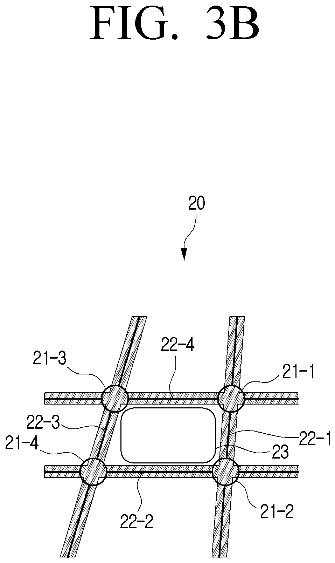

The road network graph 20 may include road information and intersection information between the roads in the predetermined range of region based on the road network information in the predetermined range of region. Specifically, in the road network graph 20, each of intersections in the predetermined range of region may be configured as a node and a road connecting two intersections may be configured as an edge connecting two nodes corresponding to the two intersections. In an example, the road network graph 20 may be referred to as the road network graph. The road network graph 20 will be described in detail with reference to FIG. 3B.

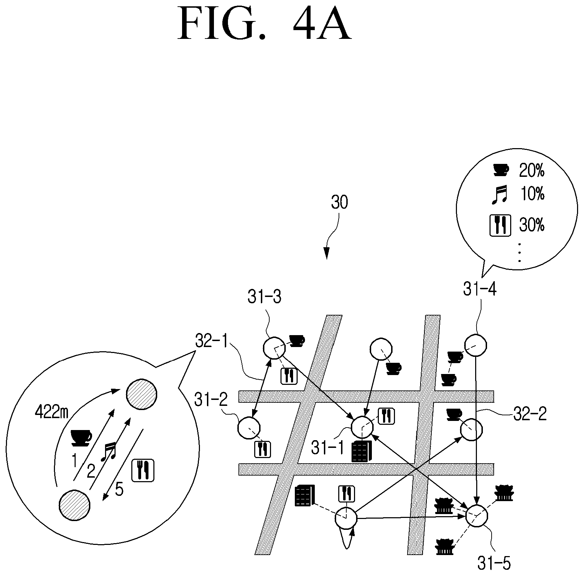

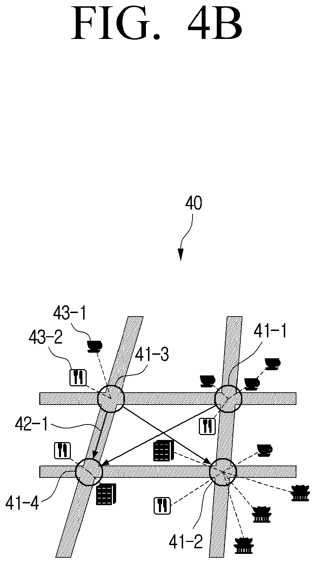

In addition, the server 100 may obtain a region mobility graph 30 based on the place mobility graph 10 and the road network graph 20. In an example, the server 100 may identify one area configured with the nodes and edges of the road network graph 20 as one of a plurality of nodes included in the region mobility graph 30. In addition, the server 100 may configure the movement information between the plurality of nodes included in the region mobility graph 30 and the information on the physical distance between the plurality of nodes as edges of the region mobility graph 30. Here, the movement information between the plurality of nodes may be divided for each category corresponding to the place included in the nodes. The region mobility graph 30 will be described in detail with reference to FIGS. 4A and 4B.

When the region mobility graph 30 is obtained, the server 100 may learn the region mobility graph 30 through the GCN model and obtain the embedding vector for predicting the movement information between the nodes included in the region mobility graph 30. In other words, the server 100 may learn the region mobility graph 30 through the GCN model and obtain the embedding vector capable of predicting final edges between the plurality of nodes included in the region mobility graph 30.

FIG. 3A is a diagram illustrating the place mobility graph according to an embodiment.

Referring to FIG. 3A, a place mobility graph 10 may include first nodes 11-1, 11-2, ... corresponding to each of a plurality of places included in the predetermined range of region. In an example, the first node 11-1 or 11-2 included in the place mobility graph 10 may include information on the place corresponding to the first node 11-1 or 11-2, and the information on the place may include location information of the place and category information of the place.

In addition, when a specific user moved from a place corresponding to any one first node among the first nodes 11-1, 11-2, ... included in the place mobility graph 10 to a place corresponding to another first node, the place mobility graph 10 may include a first edge 12-1 connecting the two first nodes. In an example, when the specific user moved from the first node 11-1 included in the place mobility graph 10 to the second node 11-2, the first node 11-1 and the first node 11-2 may be connected with the first edge 12-1 in the place mobility graph 10. Here, the first edge 12-1 between the first node 11-1 and the first node 11-2 may include direction information such as an arrow illustrated in FIG. 3A. In other words, the first edge 12-1 may include information indicating that the specific user moved from the first node 11-1 to the first node 11-2.

FIG. 3B is a graph illustrating the road network graph according to an embodiment.

Referring to FIG. 3B, a road network graph 20 may include second nodes 21-1, 21-2, 21-3, 21-4 corresponding to each of the intersections included in the predetermined range of region. In addition, a road connecting the two intersections may be configured as second edges 22-1, 22-2, 22-3, 22-4 connecting two second nodes each corresponding to an intersection. In an example, the road network graph 20 may include a second edge 22-1 corresponding to a road connecting a second node 21-1 and a second node 21-2 and may include a second edge 22-2 corresponding to a road connecting a second node 21-2 and a second node 21-4.

FIG. 4A is a graph illustrating the region mobility graph according to an embodiment.

Referring to FIG. 4A, in a region mobility graph 30, an area configured with the nodes and the edges in the predetermined range of region, in the road network graph 20, may be identified as one of third nodes 31-1, 31-2, 31-3, 31-4, 31-5 included in the region mobility graph 30. In an example, an area 23 configured with the second node 21-1, the second node 21-2, the second node 21-3, the second node 21-4, the second edge 22-1, the second edge 22-2, the second edge 22-3, and the second edge 22-4 included in the road network graph 20 of FIG. 3B may be identified as a third node 31-1 of the region mobility graph 30. In addition, the third node 31-1 may include information on a place, with respect to a plurality of places included in the region 23 corresponding to the third node 31-1, as feature information.

Specifically, the information on the place may include information on category distribution corresponding to the plurality of places located in the area corresponding to the corresponding node. In an example, a third node 31-4 may include information on category distribution corresponding to a plurality of places included in an area corresponding to the third node 31-4, and the feature information corresponding to the third node 31-4 may include information indicating that distribution of "café" category is 20%, distribution of "karaoke" category is 10%, and distribution of "restaurant" category is 30% in the area corresponding to the third node 31-4.

In addition, the region mobility graph 30 may include movement information between nodes included in the region mobility graph 30 and information on a physical distance between nodes as third edges. In an example, a third edge 32-1 connecting a third node 31-2 and a third node 31-3 may include information indicating that a distance between the third node 31-2 and the third node 31-3 is 422 m. In an example, the physical distance between nodes may refer to a distance between center points of the two areas corresponding to the two nodes, but the disclosure is not limited thereto.

In addition, the third edge 32-1 may include information indicating that a user located in the region corresponding to the third node 31-2 then moved to a place corresponding to "café" included in the third node 31-3 once. Also, the third edge 32-1 may include information indicating that the user located in the region corresponding to the third node 31-2 then moved to a place corresponding to "karaoke" included in the third node 31-3 twice. Further, the third edge 32-1 may include information indicating that the user located in the region corresponding to the third node 31-3 then moved to a place corresponding to "restaurant" included in the third node 31-2 five times.

FIG. 4B is a graph illustrating a region mobility graph according to another embodiment.

In FIG. 4A, one area configured with the nodes and edges in the predetermined range of region in the road network graph 20 is identified as the third node 31 of the region mobility graph 30, but the disclosure is not limited thereto. In other words, as in FIG. 4B, in a region mobility graph 40, a second node of the road network graph 20 may be identified as a fourth node 41 of the region mobility graph 40.

Specifically, the second node 21-1 of the road network graph 20 of FIG. 3B may be identified as a fourth node 41-1 of the region mobility graph 40, and the second node 21-2 of the road network graph 20 may be identified as a fourth node 41-2 of the region mobility graph 40.

In addition, the plurality of identified fourth nodes 41 may include information on a place, with respect to at least one place related to a location corresponding to each of the plurality of fourth nodes 41. In other words, information on a place, with respect to at least one place close to a location corresponding to one fourth node among the plurality of fourth nodes 41 among the plurality of places included in the predetermined range of region, may be included as feature information of the corresponding fourth node. In an example, a fourth node 41-3 of the region mobility graph 40 may include information on a place, with respect to a first place 43-1, and information on a place, with respect to a second place 43-2 close to the location corresponding to the fourth node 41-3, as feature information of the fourth node 41-3. Here, the information on the place for the first place 43-1 may include location information of the first place 43-1 and information indicating that the category of the first place 43-1 is "café".

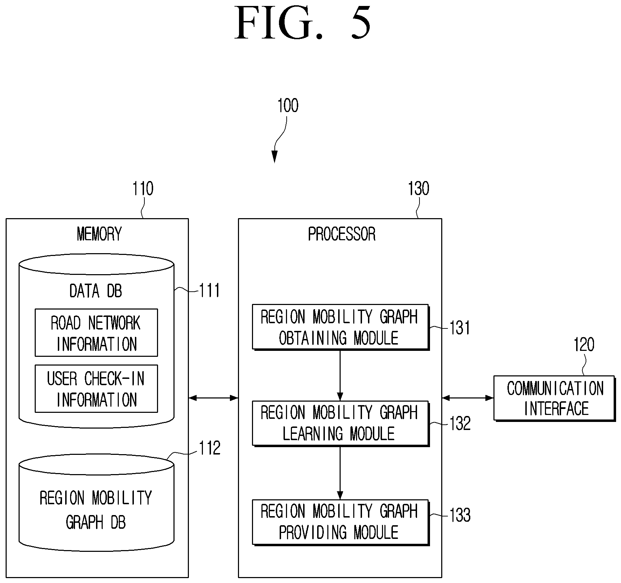

FIG. 5 is a block diagram of the server 100 according to an embodiment. Referring to FIG. 5, the server 100 may include a memory 110, a communication interface 120, and a processor 130. However, the server 100 according to the disclosure is not limited to the constituent element and some constituent elements may be added or omitted according to the type of the server.

The memory 110 may store at least one instruction or data related to at least another constituent element of the server 100. Particularly, the memory 110 may include a non-volatile memory, a volatile memory, a flash memory, a hard disk drive (HDD), a solid-state drive (SSD), and the like. The memory 110 may be accessed by the processor 130 and reading, recording, editing, deleting, or updating of the data by the processor 130 may be executed.

A term, memory, in the disclosure may include the memory 110, a ROM (not illustrated) and a RAM (not illustrated) in the processor 130, or a memory card (not illustrated) (e.g., micro SD card or memory stick) mounted on the server 100. In addition, the memory 110 may store a program and data for configuring various screens to be displayed on a display area of a display.

As described above, the memory 110 may store at least one instruction. Here, the instruction may be used to control the server 100.

The memory 110 may store the information to be used to obtain the place mobility graph, the road network graph, and the region mobility graph according to the disclosure. Specifically, the memory 110 may include the data DB 111 and the region mobility graph DB 112. The data DB 111 may store the road network information and the user check-in information and the region mobility graph DB 112 may store the information on the region mobility graph learned by the server 100.

The processor 130 may be electrically connected to the memory 110 to control general operations and functions of the server 100. The processor 130 may include one or a plurality of processors. The one or the plurality of processors may be a general-purpose processor such as a central processing unit (CPU) or an application processor (AP), a graphic dedicated processor such as a graphics processing unit (GPU) or a vision processing unit (VPU), or an artificial intelligence dedicated processor such as a neural processing unit (NPU), or the like.

The one or the plurality of processors may perform control to process the input data according to a predefined action rule stored in the memory 110 or an artificial intelligence model. The predefined action rule or the artificial intelligence model is formed through training. Being formed through training herein may, for example, imply that a predefined action rule or an artificial intelligence model for a desired feature is formed by applying a learning algorithm to a plurality of pieces of training data. Such training may be performed in a device demonstrating artificial intelligence according to the disclosure or performed by a separate server/system.

The artificial intelligence model may include a plurality of neural network layers. Each layer has a plurality of weight values, and executes processing of the layer through a processing result of a previous layer and processing between the plurality of weight values. Examples of the neural network may include a convolutional neural network (CNN), a deep neural network (DNN), recurrent neural network (RNN), restricted Boltzmann machine (RBM), deep belief network (DBN), bidirectional recurrent deep neural network (BRDNN), and deep Q-network, but the neural network of the disclosure is not limited to the above examples, unless otherwise noted.

The communication interface 120 may communicate with an external apparatus. The communication connection of the communication interface 120 with the external apparatus may include communication via a third apparatus (e.g., a repeater, a hub, an access point, a gateway, or the like). The wireless communication may include, for example, cellular communication using at least one of LTE, LTE Advanced (LTE-A), code division multiple access (CDMA), wideband CDMA (WCDMA), universal mobile telecommunications system (UMTS), Wireless Broadband (WiBro), or global system for mobile communications (GSM). In an embodiment, the wireless communication may include, for example, at least one of wireless fidelity (Wi-Fi), Bluetooth, Bluetooth Low Energy (BLE), Zigbee, near field communication (NFC), magnetic secure transmission, radio frequency (RF), or body area network (BAN). The wired communication may include, for example, at least one of universal serial bus (USB), high definition multimedia interface (HDMI), recommended standard 232

(RS-232), power line communication, or plain old telephone service (POTS). The network for the wireless communication and the wired communication may include at least one of a telecommunication network, for example, a computer network (e.g., LAN or WAN), the Internet, or a telephone network.

Particularly, the communication interface 120 may communicate with the external electronic apparatus 200 and transmit the information on the region mobility graph to the electronic apparatus 200.

The processor 130 may operate an operating system or an application program to control hardware or software elements connected to the processor 130 and perform various data processing and operations. In addition, the processor 130 may load and process an instruction or data received from at least one of other elements on a volatile memory and store various pieces of data in a non-volatile memory.

The processor 130 may be electrically connected to the memory 110 and control general operations and functions of the server 100. Particularly, the processor 130 may obtain the road information in the predetermined range of region and the information on the plurality of places in the region by executing at least one instruction stored in the memory 110.

In addition, the processor 130 may obtain the region mobility graph corresponding to the predetermined range of region including a plurality of nodes including a plurality of places and edges connecting the plurality of nodes through the region mobility graph obtaining module 131 based on the movement information between the plurality of places.

Specifically, the processor 130 may obtain the place mobility graph corresponding to the predetermined range of region including a plurality of first nodes corresponding to the plurality of places and a first edge connecting the plurality of nodes and including the movement information between the plurality of places through the region mobility graph obtaining module 131 based on the information on the plurality of places and the movement information between the plurality of places. In addition, the processor 130 may obtain the road network graph including a plurality of second nodes corresponding to intersections and a second edge connecting the second nodes through the region mobility graph obtaining module 131 based on the road information in the region. Further, the processor 130 may obtain the region mobility graph based on the place mobility graph and the road network graph through the region mobility graph obtaining module 131.

In an embodiment, the processor 130 may identify one area configured with the plurality of second nodes and the second edges of the road network graph as a node of the region mobility graph. In addition, based on the movement information between the plurality of places, the processor may identify the movement information between the plurality of identified nodes and the information on the physical distance between the plurality of identified nodes as edges of an edge of the region mobility graph. In this case, each of the plurality of nodes may include information on a place, with respect to at least one place located in the area corresponding to each of the plurality of nodes, as the feature information, and the information on the place may include the location information of the place and the category information corresponding to the place.

In an embodiment, the processor 130 may identify the plurality of second nodes of the road network graph as the node of the region mobility graph. In addition, based on the movement information between the plurality of places, the processor 130 may identify the movement information between the plurality of identified nodes and the information on the physical distances between the plurality of identified nodes as the edge of the region mobility graph. Here, each of the plurality of nodes may include the information on the place, with respect to at least one place related to the location corresponding to each of the plurality of identified nodes, as the feature information.

In addition, the processor 130 may learn the region mobility graph through the graph convolutional network (GCN) model for predicting relationship between the nodes through the region mobility graph learning module 132. In an example, the processor 130 may obtain the embedding vector for predicting the edge included in the region mobility graph by learning the region mobility graph through the GCN model.

In addition, the processor 130 may provide the learned region mobility graph to an external apparatus through the region mobility graph providing module 133. In an example, when a request for the region mobility graph corresponding to the predetermined range of region is received from the electronic apparatus 200, the processor 130 may transmit the learned region mobility graph to the electronic apparatus 200 through the communication interface 120. Here, the learned region mobility graph may include the information on the embedding vector for the region mobility graph corresponding to the predetermined range of region.

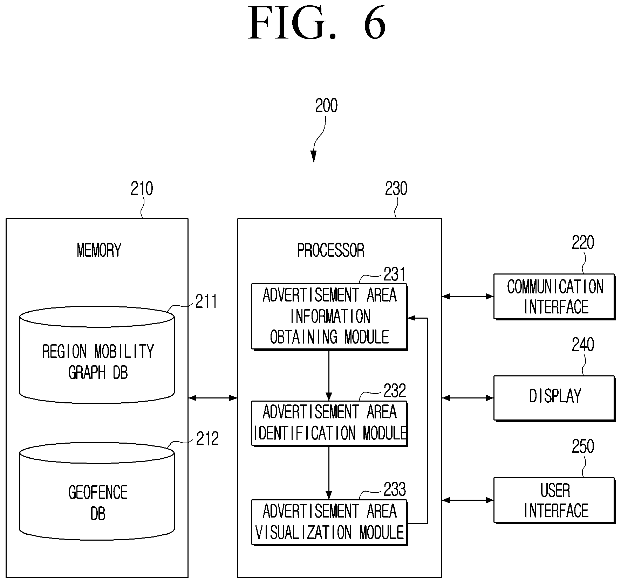

FIG. 6 is a block diagram of the electronic apparatus 200 according to an embodiment. Referring to FIG. 6, the electronic apparatus 200 may include a memory 210, a communication interface 220, a processor 230, a display 240, and a user interface 250. However, the electronic apparatus 200 according to the disclosure is not limited to the constituent elements described above, and some constituent elements may be added or omitted according to the type of server.

The memory 210 may store at least one instruction or data related to at least another constituent element of the electronic apparatus 200. Particularly, the memory 210 may include a non-volatile memory, a volatile memory, a flash memory, a hard disk drive (HDD), a solid-state drive (SSD), and the like. The memory 210 may be accessed by the processor 230 and reading, recording, editing, deleting, or updating of the data by the processor 230 may be executed.

A term, memory, in the disclosure may include the memory 210, a ROM (not illustrated) and a RAM (not illustrated) in the processor 230, or a memory card (not illustrated) (e.g., micro SD card or memory stick) mounted on the electronic apparatus 200. In addition, the memory 210 may store a program and data for configuring various screens to be displayed on a display area of a display.

As described above, the memory 210 may store at least one instruction. Here, the instruction may be used to control the electronic apparatus 200.

The memory 210 may store information to be used to provide the advertisement area according to the disclosure. Specifically, the memory 210 may include the region mobility graph DB 211 and the geofence DB 212. The region mobility graph DB 211 may store the information on the region mobility graph received from the server 100 and the geofence DB 212 may store various pieces of information for providing the advertisement corresponding to the user request.

The communication interface 220 may communicate with an external apparatus. The communication connection of the communication interface 220 with the external apparatus may include communication via a third apparatus (e.g., a repeater, a hub, an access point, a gateway, or the like). The wireless communication may include, for example, cellular communication using at least one of LTE, LTE Advanced (LTE-A), code division multiple access (CDMA), wideband CDMA (WCDMA), universal mobile telecommunications system (UMTS), Wireless Broadband (WiBro), or global system for mobile communications (GSM). In an embodiment, the wireless communication may include, for example, at least one of wireless fidelity (Wi-Fi), Bluetooth, Bluetooth Low Energy (BLE), Zigbee, near field communication (NFC), magnetic secure transmission, radio frequency (RF), or body area network (BAN). The wired communication may include, for example, at least one of universal serial bus (USB), high definition multimedia interface (HDMI), recommended standard 232 (RS-232), power line communication, or plain old telephone service (POTS). The network for the wireless communication and the wired communication may include at least one of a telecommunication network, for example, a computer network (e.g., LAN or WAN), the Internet, or a telephone network.

Particularly, the communication interface 220 may communicate with the external server 100 and receive the region mobility graph from the server 100.

The processor 230 may be electrically connected to the memory 210 and control general operations and functions of the electronic apparatus 200. The processor 230 may be formed of one or a plurality of processors. The one or the plurality of processors may be a general-purpose processor such as a central processing unit (CPU) or an application processor (AP), a graphic dedicated processor such as a graphics processing unit (GPU) or a vision processing unit (VPU), or an artificial intelligence dedicated processor such as a neural processing unit (NPU), or the like.

The processor 230 may operate an operating system or an application program to control hardware or software elements connected to the processor 230 and perform various data processing and operations. In addition, the processor 230 may load and process an instruction or data received from at least one of other elements on a volatile memory and store various pieces of data in a non-volatile memory.

The processor 230 may be electrically connected to the memory 210 and control general operations and functions of the electronic apparatus 200. Particularly, the processor 230 may receive the user request for providing the advertisement for the predetermined region through the advertisement area information obtaining module 231 by executing at least one instruction stored in the memory 210. In addition, when the user request for providing the advertisement for the predetermined range of region is received, the processor 230 may control the communication interface 220 to receive the region mobility graph including the information on the plurality of range of region from the server 100 through the advertisement area information obtaining module 231. Here, the region mobility graph received from the server 100 may be the region mobility graph that is learned on the server 100 to include the information on the embedding vector. In addition, the user request for providing the advertisement may include information on the place to be advertised, and the information on the place may include location information of the corresponding place and category information of the corresponding place. However, the disclosure is not limited thereto, and the information on the place may further include information to be used to set the advertisement area (e.g., information on advertisement cost, information on a target, information on trigger condition for providing advertisement, and the like).

In addition, the processor 230 may identify at least another node from which the target user is predicted to move to a node corresponding to the user request among the plurality of nodes in the region mobility graph based on the obtained region mobility graph through the advertisement area information obtaining module 231. Specifically, the processor 230 may identify a first number of nodes corresponding to a location from which the target user has a high probability of visiting to the place corresponding to the user request in the predetermined range of region among the plurality of nodes included in the region mobility graph.

In addition, the processor 230 may identify the advertisement area for providing the advertisement corresponding to the user request in the predetermined range of region based on at least another identified node through the advertisement area identification module 232. Specifically, the processor 230 may identify a first area corresponding to the first number of identified nodes in the predetermined range of region as the advertisement area.

In addition, the processor 230 may control the display 240 to display information on the identified advertisement area and first additional information corresponding to the identified advertisement area through the advertisement area visualization module 233. Here, the first additional information corresponding to the advertisement area may include information obtained by predicting cost that may occur when providing the advertisement in the identified advertisement area and area information corresponding to each of the first number of identified nodes. Here, the area information corresponding to each of the first number of nodes may include various pieces of information such as category information corresponding to each of the first number of nodes, information on a probability obtained by predicting movement of the target user to a place corresponding to the user request from the area corresponding to the first number of nodes, and the like.

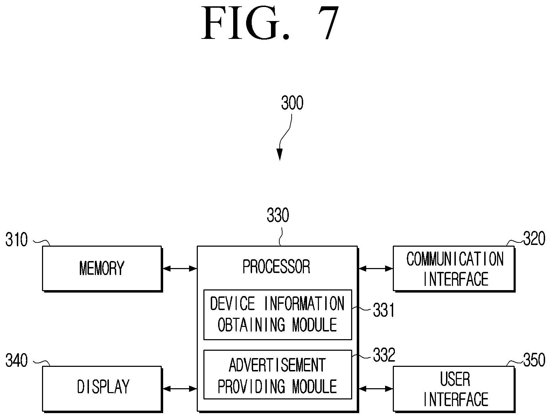

In addition, the processor 230 may receive a user input for providing the advertisement through the advertisement area visualization module 233. When the user input for providing the advertisement is received, the processor 230 may store the area information for the advertisement area corresponding to the first number of nodes, the information on the place to be advertised by the user, and the additional information corresponding to the advertisement area in the geofence DB 212. However, there is no limitation thereto, and the processor 230 may store various pieces of information for providing the advertisement corresponding to the user request in the geofence DB 212. In addition, the advertisement corresponding to the user request may be provided to a user device 300 (see FIG. 7), which may be the target user's device that is located in the range of the region corresponding to the user request and satisfies a specific trigger condition based on the geofence DB 212.

Further, the processor 230 may control the user interface 250 to receive a user input for changing the advertisement area based on the displayed information through the advertisement area visualization module 233. In an example, the processor 230 may receive a user input for expanding the advertisement area or a user input for reducing the advertisement area based on the advertisement area displayed on the display 240.

In addition, when the user input for changing the advertisement area based on the displayed information is received, the processor 230 may identify a second number of nodes corresponding to a location from which the target user has a high probability of visiting to the place corresponding to the user request in the predetermined range of region among the plurality of nodes included in the region mobility graph through the advertisement area information obtaining module 231. In an example, when the user input for changing the advertisement area is the user input for expanding the advertisement area, the second number may be greater than the first number. When the user input for changing the advertisement area is the user input for reducing the advertisement area, the second number may be less than the first number. In addition, the processor 230 may identify a second area corresponding to the second number of identified nodes in the predetermined range of region as the advertisement area through the advertisement area identification module 232. Further, the processor 230 may control the display 240 to display the information on the identified advertisement area and second additional information corresponding to the identified advertisement area through the advertisement area visualization module 233. Here, the second additional information corresponding to the advertisement area may include information obtained by predicting cost that may occur when providing the advertisement in the identified advertisement area and area information corresponding to each of the second number of identified nodes. Here, the area information corresponding to each of the second number of nodes may include various pieces of information such as category information corresponding to each of the second number of nodes, information on a probability obtained by predicting movement of the target user to a place corresponding to the user request from the area corresponding to the second number of nodes, and the like.

The display 240 may allow the electronic apparatus 200 to provide the information visually. The electronic apparatus 200 may include one or more displays 240 and control to display the information corresponding to the identified advertisement area through the display 240. The display 240 may be implemented as a liquid crystal display (LCD), a plasma display panel (PDP), organic light emitting diodes (OLED), a transparent OLED (TOLED), a micro LED, and the like. In addition, the display 240 may be implemented in a form of a touch screen capable of detecting user's touch manipulation and may be implemented as a foldable or bendable flexible display.

The user interface 250 may receive an input of a user command for controlling the electronic apparatus 200. Particularly, the user interface 250 may be implemented as a device such as a button, a touch pad, a mouse, and a keyboard, and may also be implemented as a touch screen capable of performing the display function and the manipulation input function. Here, the button may be various types of buttons such as a mechanical button, a touch pad, or a wheel formed in any region of a front portion, a side portion, or a rear portion of the appearance of the main body of the electronic apparatus 200.

Particularly, the user interface 250 may receive various user inputs such as a user input for providing the advertisement for the predetermined range of region, a user input for changing the advertisement area, and the like.

FIG. 7 is a block diagram of the user device 300 according to an embodiment. Referring to FIG. 7, the user device 300 may include a memory 310, a communication interface 320, a processor 330, a display 340, and a user interface 350. The user device 300 according to the disclosure may be implemented as various types of electronic devices such as a smartphone, AR glasses, a table PC, a mobile phone, a video phone, an e-book reader, a TV, a desktop PC, a laptop PC, a netbook computer, a workstation, a camera, a smart watch, and the like. However, the user device 300 according to the disclosure is not limited to the above elements and some elements may be added or omitted according to the type of server.

The memory 310 may store at least one instruction or data related to at least another constituent element of the electronic device 300. Particularly, the memory 310 may be implemented as a non-volatile memory, a volatile memory, a flash memory, a hard disk drive (HDD), a solid-state drive (SSD), and the like. The memory 310 may be accessed by the processor 330 and reading, recording, editing, deleting, or updating of the data by the processor 330 may be executed.

A term, memory, in the disclosure may include the memory 310, a ROM (not illustrated) and a RAM (not illustrated) in the processor 330, or a memory card (not illustrated) (e.g., micro SD card or memory stick) mounted on the user device 300. In addition, the memory 310 may store a program and data for configuring various screens to be displayed on a display area of a display.

As described above, the memory 310 may store at least one instruction. Here, the instruction may be used to control the user device 300.

The communication interface 320 may communicate with an external apparatus. The communication connection of the communication interface 320 with the external apparatus may include communication via a third apparatus (e.g., a repeater, a hub, an access point, a gateway, or the like). The wireless communication may include, for example, cellular communication using at least one of LTE, LTE Advanced (LTE-A), code division multiple access (CDMA), wideband CDMA (WCDMA), universal mobile telecommunications system (UMTS), Wireless Broadband (WiBro), or global system for mobile communications (GSM). In an embodiment, the wireless communication may include, for example, at least one of wireless fidelity (Wi-Fi), Bluetooth, Bluetooth Low Energy (BLE), Zigbee, near field communication (NFC), magnetic secure transmission, radio frequency (RF), or body area network (BAN). The wired communication may include, for example, at least one of universal serial bus (USB), high definition multimedia interface (HDMI), recommended standard 232 (RS-232), power line communication, or plain old telephone service (POTS). The network for the wireless communication and the wired communication may include at least one of a telecommunication network, for example, a computer network (e.g., LAN or WAN), the Internet, or a telephone network.

The processor 330 may be electrically connected to the memory 310 and control general operations and functions of the user device 300. The processor 330 may be formed of one or a plurality of processors. The one or the plurality of processors may be a general-purpose processor such as a central processing unit (CPU) or an application processor (AP), a graphic dedicated processor such as a graphics processing unit (GPU) or a vision processing unit (VPU), or an artificial intelligence dedicated processor such as a neural processing unit (NPU), or the like.

The processor 330 may operate an operating system or an application program to control hardware or software elements connected to the processor 330 and perform various data processing and operations. In addition, the processor 330 may load and process an instruction or data received from at least one of other elements on a volatile memory and store various pieces of data in a non-volatile memory.

The processor 330 may be electrically connected to the memory 310 and control general operations and functions of the user device 300. Particularly, the processor 330 may obtain device information of the user device 300 through a device information obtaining module 331. The processor 330 may obtain movement information of the user device 300 based on location information of the user device 300. In addition, the processor may obtain information on a visit history of the user device 300 based on the location information of the user device 300.

In an example, when the user device 300 is located at a specific place, the processor 330 may obtain the location information of the user device 300 based on GPS information through the device information obtaining module 331. In an example, when the user device 300 is located at the specific place, the processor 330 may obtain the location information of the user device 300 based on AP information of the corresponding place through the device information obtaining module 331. In an example, when a purchase is performed at the specific place through the user device 300, the processor 330 may obtain the location information of the user device 300 based on purchase information through the device information obtaining module 331. The embodiment of obtaining the location information of the user device 300 is not limited to the above examples and the information may be obtained through various methods.

In addition, the processor 330 may obtain information on a visit history between a previous visit place and a next visit place of the user device 300 based on the location information of the user device 300 through the device information obtaining module 331. Here, the information on the visit history may include category information for the previous visit place, category information for the next visit place, information on a time during which the user device 300 stayed in the previous visit place, information on a time during which the user device 300 stayed in the next visit place, and the like.

In addition, the processor 330 may transmit the information on the visit history of the user device 300 to the server 100. Further, the server 100 may utilize the information on the visit history of the user device 300 received from the user device 300 as the user check-in information.

Also, when the user device 300 is located in the advertisement area corresponding to the user request of the electronic apparatus 200 based on the location information of the user device 300, the processor 330 may control the display 340 to display the advertisement corresponding to the user request of the electronic apparatus 200 through an advertisement providing module 332.

However, there is no limitation thereto, and when the user device 300 is located in the range of region corresponding to the user request of the electronic apparatus 200 based on the location information of the user device 300 and a user of the user device 300 satisfies a predetermined trigger condition, the processor 330 may control the display 340 to display the advertisement corresponding to the user request of the electronic apparatus 200 through the advertisement providing module 332. Here, the predetermined trigger condition may refer to a condition of the user of the user device 300 for providing the advertisement corresponding to the user request, and may be set by the user of the electronic apparatus 200. In an example, the predetermined trigger condition may include various condition information such as an age condition of the user of the user device 300 for providing the advertisement, a gender condition of the user of the user device 300, a condition of a propensity to consume of the user of the user device 300, and the like.

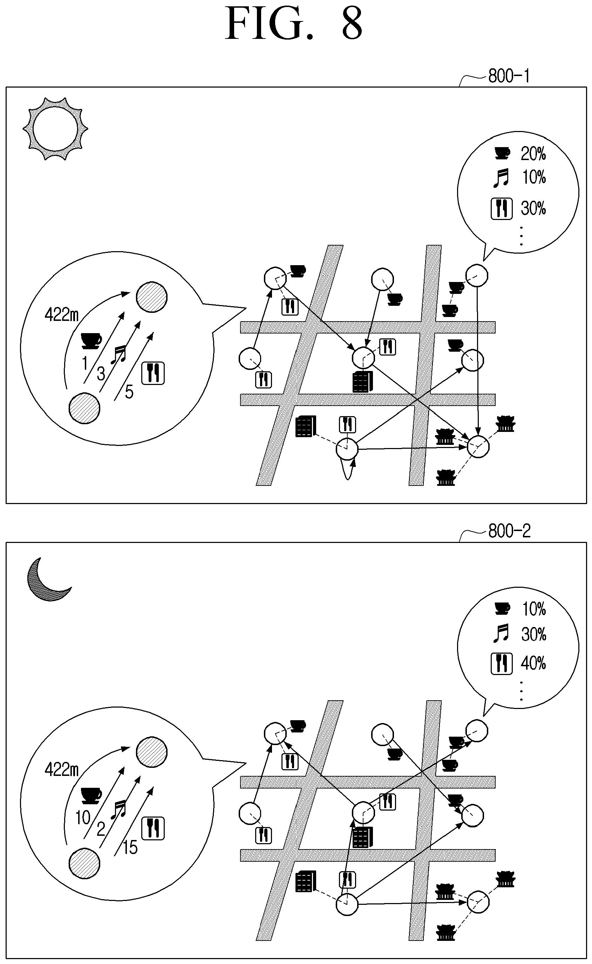

FIG. 8 is a diagram illustrating region mobility graphs different for each time zone according to an embodiment.

Referring to FIG. 8, the region mobility graphs according to the disclosure may be different for each time zone. In other words, the region mobility graphs according to the disclosure may have feature information including the edges and nodes that are different for each time zone.

An embodiment 800-1 of FIG. 8 may be a region mobility graph for lunchtime. In an example, the server 100 may generate a first place mobility graph based on the user check-in information for lunchtime, for example, from 12 PM to 2 PM, and obtain a first region mobility graph for lunchtime based on the first place mobility graph and the road network graph. In addition, the server 100 may obtain the embedding vector corresponding to the first region mobility graph by learning the first region mobility graph obtained through the GCN model.

An embodiment 800-2 of FIG. 8 may be a region mobility graph for dinner time. In an example, the server 100 may generate a second place mobility graph based on the user check-in information for dinner time, for example, from 6 PM to 9 PM, and obtain a second region mobility graph for dinner time based on the second place mobility graph and the road network graph. In addition, the server 100 may obtain the embedding vector corresponding to the second region mobility graph by learning the second region mobility graph obtained through the GCN model.

In other words, according to the disclosure, the server 100 may learn the plurality of region mobility graphs corresponding to the predetermined range of region and different for each time zone through the GCN model, and obtain the embedding vector corresponding to each of the plurality of region mobility graph.

In the embodiment described above, only two region mobility graphs divided into the lunchtime zone and the dinner time zone are illustrated, but the disclosure is not limited thereto, and a plurality of region mobility graphs may be present for various time zones.

In the embodiment described above, it is described that the plurality of region mobility graphs divided for each time zone are obtained based on the user check-in information different for each time zone, but the disclosure is not limited thereto, and the embedding vector for predicting edges different for each time zone may also be obtained through one region mobility graph based on the user check-in information including time information.

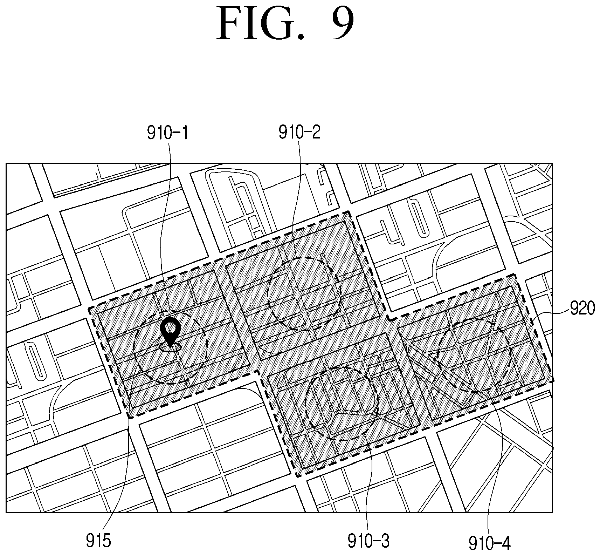

FIG. 9 is a diagram illustrating an advertisement area for providing advertisement corresponding to a request of a user of the electronic apparatus in a predetermined range of region according to an embodiment.

According to the disclosure, referring to FIG. 4A, the region mobility graph 30 may identify one area configured with nodes and edges in the road network graph of the predetermined range of region as a node 910-1, 910-2, 910-3, or 910-4 (FIG. 9) of the region mobility graph 30. In addition, each of the plurality of nodes of the region mobility graph 30 may include information on the place, with respect to at least one place of the plurality of places included in the area corresponding to each node, as the feature information.

Further, based on the region mobility graph 30, the electronic apparatus 200 may display an advertisement area 920 for providing advertisement for a place 915 corresponding to a user's request of the electronic apparatus 200 on a map corresponding to the predetermined range of region, as illustrated in FIG. 9.

Specifically, the electronic apparatus 200 may receive a user request for providing the advertisement corresponding to the place 915 in the predetermined range of region.

In addition, the electronic apparatus 200 may identify at least nodes 910-2, 910-3, and 910-4, from which the target user is predicted to move to the node including the place 915 corresponding to the user request among the plurality of nodes in the region mobility graph based on the region mobility graph 30 corresponding to the predetermined range of region received from the server 100. Specifically, the electronic apparatus 200 may identify the first number (e.g., three) of nodes 910-2, 910-3, and 910-4 corresponding to a location from which the target user has a high probability of visiting to the place 915 corresponding to the user request in the predetermined range of region among the plurality of nodes included in the region mobility graph.

In addition, the electronic apparatus 200 may identify the advertisement area 920 for providing the advertisement corresponding to the user request in the predetermined range of region based on the first number of identified nodes 910-2, 910-3, and 910-4 and the node 910-1 including the place 915 corresponding to the user request, and display the advertisement area 920 on the map corresponding to the predetermined range of region.

Although not illustrated in FIG. 9, the electronic apparatus 200 may further display information on the identified advertisement area 920 and first additional information corresponding to the identified advertisement area 920. Here, the first additional information corresponding to the advertisement area 920 may include information obtained by predicting cost that may occur when providing the advertisement in the identified advertisement area 920 and area information corresponding to each of the first number of identified nodes. Here, the area information corresponding to each of the first number of nodes may include various pieces of information such as category information corresponding to each of the first number of nodes, information on a probability obtained by predicting movement of the target user to a place corresponding to the user request from the area corresponding to each of the first number of nodes, and the like.

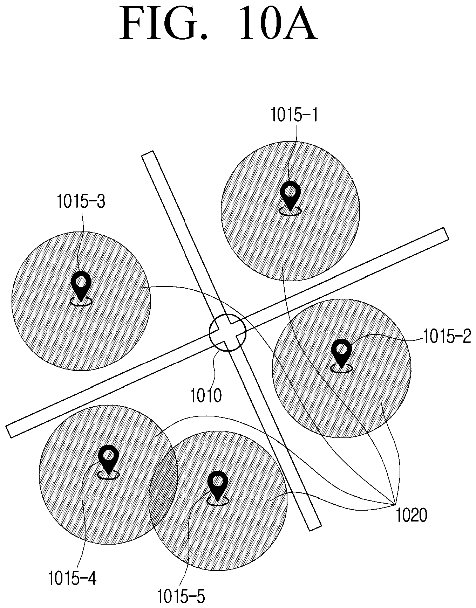

FIG. 10A is a diagram illustrating an example of identifying the advertisement area for providing advertisement corresponding to a request of a user of the electronic apparatus in a predetermined range of region according to an embodiment.

According to the disclosure, referring to FIG. 4B, the node of the road network graph may be identified as the node of the region mobility graph 40. In this case, the plurality of nodes of the region mobility graph 40 may include information on the place, with respect to the at least one place related to the location corresponding to each of the plurality of nodes. In other words, referring to FIG. 10A, information on a place, with respect to at least one place 1015-1, 1015-2, 1015-3, 1015-4, and 1015-5 close to a location corresponding to one node 1010 among the plurality of places included in the predetermined range of region, may be included as feature information of the corresponding node 1010.

In addition, when the corresponding node 1010 is identified as the node for providing the advertisement corresponding to the user request of the electronic apparatus 200, the electronic apparatus 200 may identify an area 1020 corresponding to the at least one place 1015-1, 1015-2, 1015-3, 1015-4, and 1015-5 close to the location corresponding to the node 1010 as the area for providing the advertisement corresponding to the user request. In an example, the area 1020 corresponding to the at least one place 1015-1, 1015-2, 1015-3, 1015-4, and 1015-5 may be an area in a predetermined range (e.g., 500 m) from each of the at least one place 1015-1, 1015-2, 1015-3, 1015-4, and 1015-5.

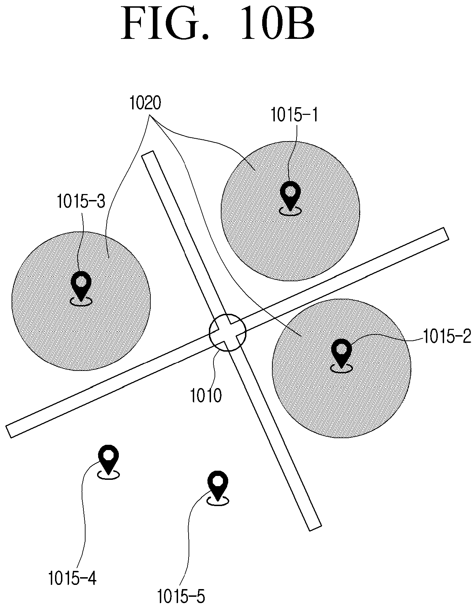

FIG. 10B is a diagram illustrating an embodiment of identifying the advertisement area for providing advertisement corresponding to a request of a user of the electronic apparatus in a predetermined range of region according to an embodiment.

Referring to FIG. 10A, the area 1020 corresponding to the places 1015-1, 1015-2, 1015-3, 1015-4, and 1015-5 corresponding to the node 1010 among the plurality of places may be identified as the area for providing the advertisement corresponding to the user request, but the disclosure is not limited thereto.

For example, referring to FIG. 10B, the electronic apparatus 200 may identify only the area 1020 corresponding to the at least one places 1015-1, 1015-2, and 1015-3, among the places 1015-1, 1015-2, 1015-3, 1015-4, and 1015-5 corresponding to the node 1010, as the area for providing the advertisement corresponding to the user request.

Specifically, the electronic apparatus 200 may identify at least one place 1015-1, 1015-2, and 1015-3 for providing the advertisement among the places 1015-1, 1015-2, 1015-3, 1015-4, and 1015-5 corresponding to the node 1010. In other words, the electronic apparatus 200 may identify the at least one place 1015-1, 1015-2, and 1015-3 for providing the advertisement based on the predetermined condition among the places 1015-1, 1015-2, 1015-3, 1015-4, and 1015-5 corresponding to the node 1010.

The electronic apparatus 200 may identify the area for providing the advertisement among the plurality of places based on a predetermined rate r. For example, the predetermined rate r is 0.6 (which may mean 60% of the total number of the plurality of places), and the electronic apparatus 200 may identify three places among five places 1015-1, 1015-2, 1015-3, 1015-4, and 1015-5 corresponding to the node 1010 as the area for providing the advertisement according to the predetermined condition. Here, the predetermined rate r may be set by the user of the electronic apparatus 200 or may be automatically set through pieces of information received by the electronic apparatus 200 from the user.

In an example, when the predetermined rate r is 0.6 and the predetermined condition is being high in an order of a great number of visitors on the current date, the electronic apparatus 200 may identify three places 1015-1, 1015-2, and 1015-3 having the great number of visitors on the current date among the places 1015-1, 1015-2, 1015-3, 1015-4, and 1015-5 corresponding to the node 1010 as the place for providing the advertisement.

In addition, the electronic apparatus 200 may identify the area 1020 corresponding to the place 1015-1, 1015-2, and 1015-3 identified as the place for providing the advertisement as illustrated in FIG. 10B, as the area for providing the advertisement.

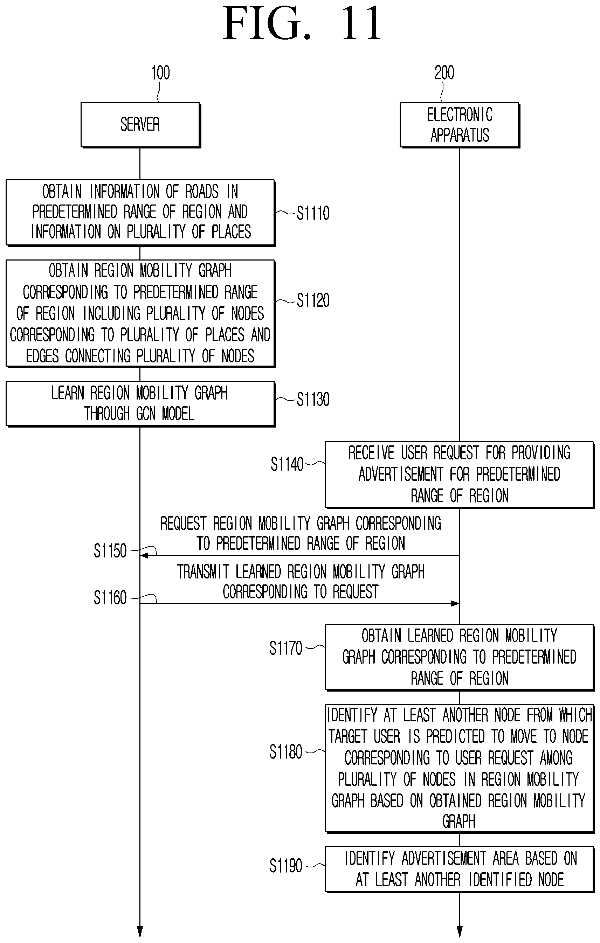

FIG. 11 is a flowchart illustrating operations between the server and the electronic apparatus according to an embodiment.

Referring to FIG. 11, the server 100 may obtain information of roads in the predetermined range of region and information on a plurality of places (S1110). In addition, the server 100 may obtain a region mobility graph corresponding to the predetermined range of region including a plurality of nodes, corresponding to a plurality of places, and edges connecting the plurality of nodes (S1120). In an example, the server 100 may obtain a place mobility graph in which each of a plurality of places in the predetermined range of region is configured as a node and a node corresponding to a previous visit place and a node corresponding to a next visit place are connected to each other with an edge through the visit history of the previous visit place (node) and the next visit place (node) of a specific user. Here, the specific user may be different from the target user to receive the advertisement, and the specific user may include a plurality of users. In addition, the server 100 may obtain a road network graph in which each of intersections included in the predetermined range of region may be configured as one node and a road connecting two intersections is configured as an edge connecting two nodes corresponding to the two intersections. Further, the server 100 may obtain a region mobility graph based on the place mobility graph and the road network graph.

Also, the server 100 may learn the region mobility graph through the GCN model (S1130). In other words, the server 100 may learn the region mobility graph through the GCN model and obtain the embedding vector for predicting the movement information between the nodes included in the region mobility graph.

In addition, the electronic apparatus 200 may receive the user request for providing the advertisement for the predetermined range of region (S1140). Further, the electronic apparatus 200 may request the region mobility graph corresponding to the predetermined range of region to the server 100 (S 1150).

When the server 100 receives a request for the region mobility graph corresponding to the predetermined range of region from the electronic apparatus 200, the server 100 may transmit the learned region mobility graph corresponding to the request (S1160). Here, the learned region mobility graph may include the information on the embedding vector for the region mobility graph corresponding to the predetermined range of region.

When the server 100 transmits the learned region mobility graph to the electronic apparatus 200, the electronic apparatus 200 may obtain the learned region mobility graph corresponding to the predetermined range of region (S 1170).

In addition, the electronic apparatus 200 may identify at least another node from which the target user is predicted to move to a node corresponding to the user request among the plurality of nodes in the region mobility graph based on the obtained region mobility graph (S1 180).

Further, the electronic apparatus 200 may identify an advertisement area based on the at least another identified node (S1190).

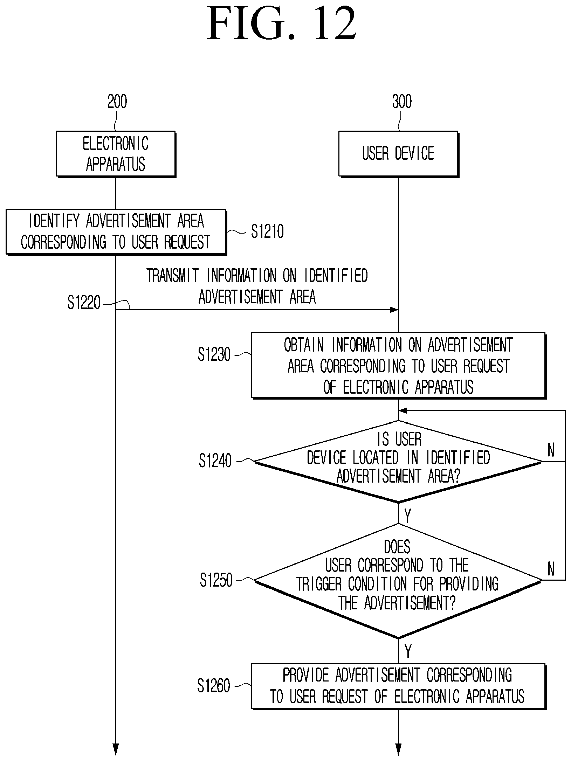

FIG. 12 is a flowchart illustrating operations between the electronic apparatus and the user device according to an embodiment.

Referring to FIG. 12, the electronic apparatus 200 may identify the advertisement area corresponding to the user request as the operation S1190 of FIG. 11 (S1210).

In addition, the electronic apparatus 200 may transmit the information on the identified advertisement area to the user device 300 (S1220). However, the disclosure is not limited thereto, and the electronic apparatus 200 may transmit the information on the identified advertisement area to an external server, and the external server may be a server for providing advertisement to a plurality of user devices. In addition, the information on the identified advertisement area may include various pieces of information for providing the advertisement such as information on a predetermined trigger condition for providing the advertisement, information on the advertisement area, information on the advertisement corresponding to the user request, and the like.

When the electronic apparatus 200 transmits the information on the identified advertisement area to the user device 300, the user device 300 may obtain the information on the advertisement area corresponding to the user request of the electronic apparatus 200 (S1230).

In addition, the user device 300 may identify whether the user device 300 is located in the identified advertisement area (S1240). In an example, the user device 300 may identify whether the user device 300 is located in the identified advertisement area through the GPS information.

When it is identified that the user device 300 is not located in the identified advertisement area (S1240-N), the user device 300 may repeat the operation S1240 and identify whether the user device 300 is located in the identified advertisement area.

In addition, when it is identified that the user device 300 is located in the identified advertisement area (S1240-Y), the user device 300 may identify whether a user corresponds to the trigger condition for providing the advertisement (S1250). The trigger condition for providing the advertisement may include, for example, whether the age of the user of the user device 300 corresponds to the trigger condition or whether the gender of the user corresponds to the trigger condition.

In addition, when it is identified that the user does not correspond to the trigger condition for providing the advertisement (S1250-N), the user device 300 may repeat the operation S1240 and identify whether the user device 300 is located in the identified advertisement area.

Further, when it is identified that the user corresponds to the trigger condition for providing the advertisement (S1250-Y), the user device 300 may provide the advertisement corresponding to the user request of the electronic apparatus 200 (S1260). In an example, the user device 300 may display the advertisement corresponding to the user request of the electronic apparatus 200 on the display of the user device 300.

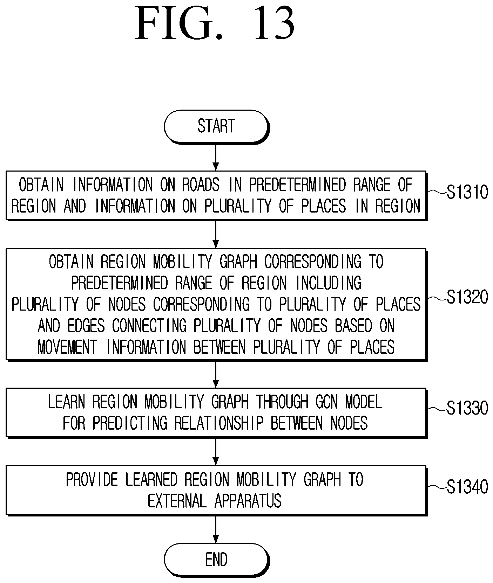

FIG. 13 is a flowchart illustrating a method for controlling the server 100 according to an embodiment.

Referring to FIG. 13, the server 100 may obtain information on roads in the predetermined range of region and information on a plurality of places in the region (S1310).

In addition, the server 100 may obtain the region mobility graph corresponding to the predetermined range of region including a plurality of nodes, corresponding to a plurality of places, and edges connecting the plurality of nodes, based on the movement information between the plurality of places (S1320).

Specifically, the server 100 may obtain the place mobility graph corresponding to the predetermined range of region including a plurality of first nodes corresponding to the plurality of places and a first edge connecting the plurality of nodes and including the movement information between the plurality of places based on the information on the plurality of places and the movement information between the plurality of places. In addition, the server 100 may obtain the road network graph including a plurality of second nodes corresponding to intersections and a second edge connecting the second nodes based on the road information in the region. Further, the server 100 may obtain the region mobility graph based on the place mobility graph and the road network graph.

In an embodiment, the server 100 may identify one area configured with the plurality of second nodes and the second edges of the road network graph as a node of the region mobility graph. In addition, the server 100 may identify the movement information between the plurality of identified nodes and the information on the physical distances between the plurality of identified nodes as the edge of the region mobility graph based on the movement information between the plurality of places. In this case, each of the plurality of nodes may include information on a place, with respect to at least one place located in the area corresponding to each of the plurality of nodes, as the feature information, and the information on the place may include the location information of the place and the category information corresponding to the place.

In an embodiment, the server 100 may identify the plurality of second nodes of the road network graph as the node of the region mobility graph. In addition, the server 100 may identify the movement information between the plurality of identified nodes and the information on the physical distances between the plurality of identified nodes as the edge of the region mobility graph based on the movement information between the plurality of places. Here, each of the plurality of nodes may include the information on the place, with respect to at least one place related to the location corresponding to each of the plurality of identified nodes, as the feature information.

In addition, the server 100 may learn the region mobility graph through the graph convolutional network (GCN) model for predicting relationship between the nodes (S1330). In an example, the server 100 may obtain the embedding vector for predicting the edge included in the region mobility graph by learning the region mobility graph through the GCN model.

In addition, the server 100 may provide the learned region mobility graph to an external apparatus (S1340). In an example, when a request for the region mobility graph corresponding to the predetermined range of region is received from the electronic apparatus 200, the server 100 may transmit the learned region mobility graph to the electronic apparatus 200. Here, the learned region mobility graph may include the information on the embedding vector for the region mobility graph corresponding to the predetermined range of region.

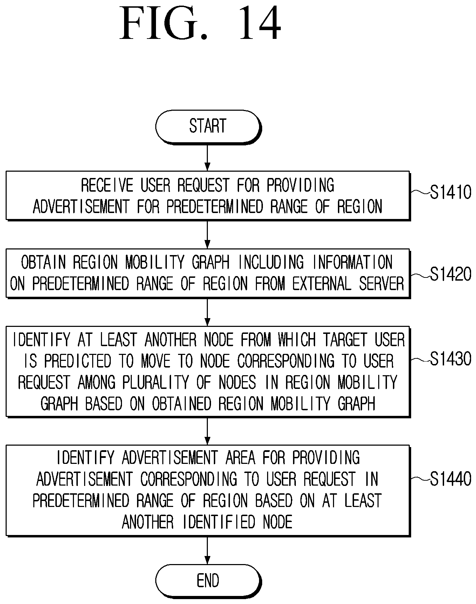

FIG. 14 is a flowchart illustrating a method for controlling the electronic apparatus 200 according to an embodiment.

Referring to FIG. 14, the electronic apparatus 200 may receive the user request for providing the advertisement for the predetermined range of region (S1410). In addition, when the user request for providing the advertisement for the predetermined range of region is received, the electronic apparatus 200 may obtain the region mobility graph including the information on the predetermined range of region from an external server (e.g., server 100) (S1420). Here, the region mobility graph received from the server 100 may be the region mobility graph that is learned on the server 100 to include the information on the embedding vector. In addition, the user request for providing the advertisement may include information on the place to be advertised, and the information on the place may include location information of the corresponding place and category information of the corresponding place. However, the disclosure is not limited thereto, and the information on the place may further include information to be used to set the advertisement area (e.g., information on advertisement cost, information on a target, information on trigger condition for providing advertisement, and the like).

In addition, the electronic apparatus 200 may identify at least another node from which the target user is predicted to move to a node corresponding to the user request among the plurality of nodes in the region mobility graph based on the obtained region mobility graph (S1430). Specifically, the electronic apparatus 200 may identify a first number of nodes corresponding to a location from which the target user has a high probability of visiting to the place corresponding to the user request in the predetermined range of region among the plurality of nodes included in the region mobility graph.

In addition, the electronic apparatus 200 may identify the advertisement area for providing the advertisement corresponding to the user request in the predetermined range of region based on at least another identified node (S 1440). Specifically, the electronic apparatus 200 may identify a first area corresponding to the first number of identified nodes in the predetermined range of region as the advertisement area.

In addition, the electronic apparatus 200 may display the information on the identified advertisement area and first additional information corresponding to the identified advertisement area. Here, the first additional information corresponding to the advertisement area may include information obtained by predicting cost that may occur when providing the advertisement in the identified advertisement area and area information corresponding to each of the first number of identified nodes. Here, the area information corresponding to each of the first number of nodes may include various pieces of information such as category information corresponding to each of the first number of nodes, information on a probability obtained by predicting movement of the target user to a place corresponding to the user request from the area corresponding to the first number of nodes, and the like.

In addition, the electronic apparatus 200 may receive a user input for providing the advertisement. When the user input for providing the advertisement is received, the electronic apparatus 200 may store the area information for the advertisement area corresponding to the first number of nodes, the information on the place to be advertised by the user, and the additional information corresponding to the advertisement area. However, there is no limitation thereto, and the electronic apparatus 200 may store various pieces of information for providing the advertisement corresponding to the user request. In addition, the advertisement corresponding to the user request may be provided to the user device 300 that is located in the range of the region corresponding to the user request and satisfies a specific trigger condition based on the stored information.

In addition, the electronic apparatus 200 may receive a user input for changing the advertisement area based on displayed information. In an example, the electronic apparatus 200 may receive a user input for expanding the advertisement area or a user input for reducing the advertisement area based on the displayed advertisement area.

In addition, when the user input for changing the advertisement area based on the displayed information is received, the electronic apparatus 200 may identify a second number of nodes corresponding to a location from which the target user has a high probability of visiting to the place corresponding to the user request in the predetermined range of region among the plurality of nodes included in the region mobility graph. In an example, when the user input for changing the advertisement area is the user input for expanding the advertisement area, the second number may be greater than the first number. When the user input for changing the advertisement area is the user input for reducing the advertisement area, the second number may be less than the first number. In addition, the electronic apparatus 200 may identify a second area corresponding to the second number of identified nodes in the predetermined range of region as the advertisement area. Further, the electronic apparatus 200 may display the information on the identified advertisement area and second additional information corresponding to the identified advertisement area. Here, the second additional information corresponding to the advertisement area may include information obtained by predicting cost that may occur when providing the advertisement in the identified advertisement area and area information corresponding to each of the second number of identified nodes. Here, the area information corresponding to each of the second number of nodes may include various pieces of information such as category information corresponding to each of the second number of nodes, information on a probability obtained by predicting movement of the target user to a place corresponding to the user request from the area corresponding to the second number of nodes, and the like.

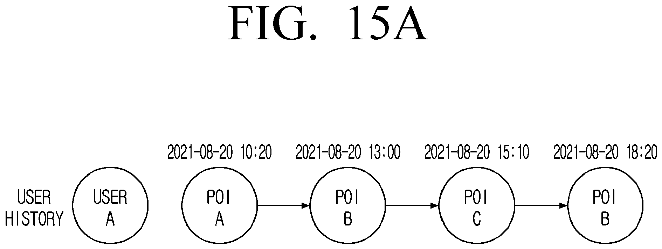

FIG. 15A is a diagram illustrating user check-in information for obtaining a place mobility graph obtained by further considering prediction time according to an embodiment.

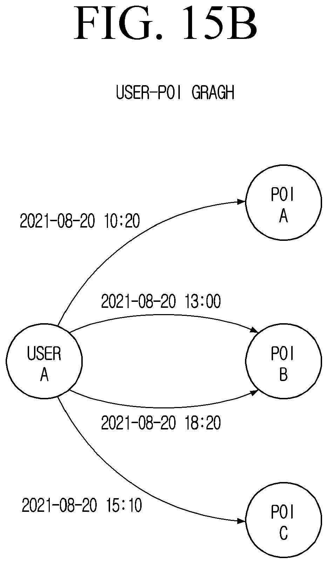

FIG. 15B is a diagram illustrating a User-Point of Interest (PoI) graph for obtaining a place mobility graph obtained by further considering prediction time according to an embodiment.

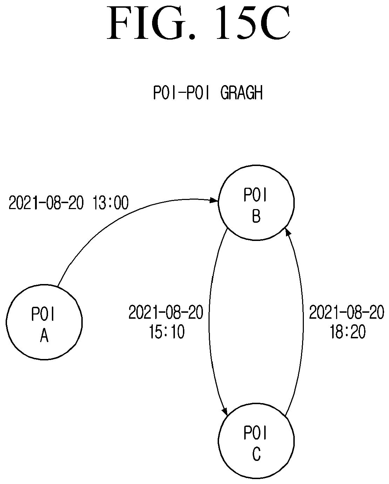

FIG. 15C is a diagram illustrating a PoI-PoI graph for obtaining a place mobility graph obtained by further considering prediction time according to an embodiment.

The place mobility graph of FIG. 2 is a graph showing a place mobility graph obtained based on information on a place where the user visited in the predetermined range of region on a specific date, that is, in a wide range of time. However, the disclosure is not limited thereto, and a place mobility graph obtained by further considering prediction time information at which the user is predicted to visit may be obtained.

Specifically, FIG. 15A is a diagram illustrating user check-in information for a user A in which places, where the user A visited on August 20, 2021, are connected.

In addition, the server 100 may obtain a User-Pol graph corresponding to the user A as in FIG. 15B based on the user check-in information for the user A. In other words, the User-PoI graph of FIG. 15B includes the user A and each of the place where the user A visited as nodes, when the user A visited a place, an edge may be generated between the user A and the corresponding place, and information on the visit time may be stored as feature information for the corresponding edge.

In addition, the server 100 may obtain a PoI-PoI graph as in FIG. 15B by summarizing the User-PoI graphs corresponding to the plurality of users. In other words, the PoI-PoI graph of FIG. 15B may include each of places as a node, when there is a user who visited two places consecutively, an edge may be generated between the two places, and information on a visit time when the user visited the place secondly among the two places may be stored as feature information for the corresponding edge.

In addition, the server 100 may obtain a place mobility graph (e.g., DynaPosGNN) in which the nodes connected in the graphs are aggregated based on the current place of the specific user using the User-PoI graph corresponding to the plurality of users and the PoI-PoI graph.

Specifically, the server 100 may aggregate nodes corresponding to the user from the User-PoI graph, aggregate the node corresponding to the place where the user is currently located from the PoI-PoI graph, and aggregate nodes in an outward direction from each node. At this time, an aggregate weight may be determined by considering some or all of time slot distance information, time difference between current and history information, distance information, and time difference between current and future information.

Here, the time slot distance information may refer to distance information between a time slot of the time to be predicted and a time slot of a past visit history. In addition, the time difference between current and history information may refer to difference information between the current time and the past visit time. Further, the distance information may refer to distance information between the current location and the connected PoI. Furthermore, the time difference between current and future information may refer to difference information between the current time and the time to be predicted. For example, the time slot may divide one day into 24 time slots and each visit time may be identified as a corresponding slot among 24 time slots. In addition, the distance between time slots may be obtained by selecting a close value among difference between two times, and may be defined as mib(abs(a-b), abs(a+24-b), abs(a-24-b)). Here, a and b may be two time slots to be compared.

In addition, the three information except for the time slot distance information may be infinitely increased according to the time or distance difference, and thus scaling is needed. Accordingly, according to the disclosure, 1/(1 + x) may be substituted with each value (x) to scaling to a value of 0 to 1, thereby inputting to the place mobility graph (specifically, DynaPosGNN).

In addition, the server 100 may aggregate the aggregation weights calculated through the above process, passing it through a softmax function to obtain a sum of 1, and a weighted sum using this as weight is obtained, thereby calculating a final result value.

Specifically, the server 100 may obtain the embedding vector by inputting the User-PoI graph and the PoI-PoI graph in the time zone to be predicted to each place mobility graph (e.g., DynaPosGNN). In addition, the server 100 may multiply each weight obtained from a difference between the current time and the time to be predicted by the two obtained embedding vectors, and then add the two values. In addition, the server 100 may obtain information on a probability value of visiting to each PoI by passing Multi-layer Perceptron (MLP) based on the corresponding value.

The server 100 may obtain user movement information obtained by reflecting prediction time information by using the place mobility graph (e.g., DynaPosGNN) obtained through the above process.

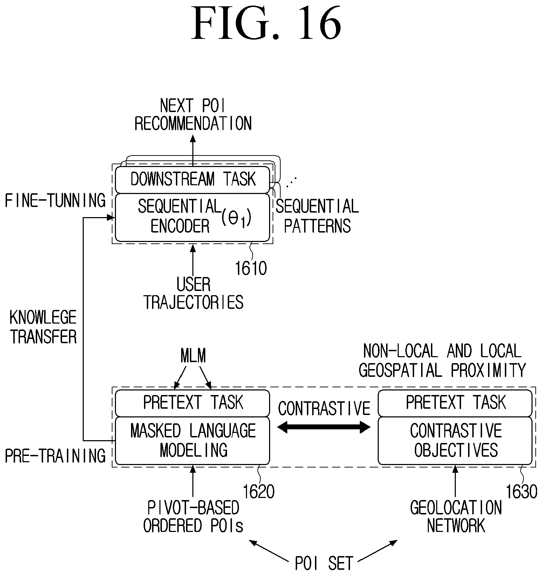

FIG. 16 is a diagram illustrating a pre-training technology for performance improvement of location-based service (LBS) according to an embodiment.

The place mobility graphs (e.g., DynaPosGNN) of the related art may be subjected to training by learning data patterns related to downstream task by an end-to-end method. For example, a next-location prediction model which is one of the place mobility graphs may predict a next place by learning a pattern between places from a place sequence in the movement information of the target user. Accordingly, the disclosure may use a pre-training technology for performance improvement of such a place mobility graph.

FIG. 16 is a diagram illustrating a method for pre-training a next-location prediction model 1610. Here, the next-location prediction model 1610 is a model which receives an input of the user movement information (user trajectories) and outputs information on a place predicted to be visited by the corresponding user next time (Next PoI). Specifically, referring to FIG. 16, the server 100 may perform pre-training through contrastive training between a masked language modeling model 1620 and a contrastive objectives model 1630 and transfer the information obtained based on the pre-training to the next-location prediction model 1610, thereby improving performance of the next-location prediction model 1610.

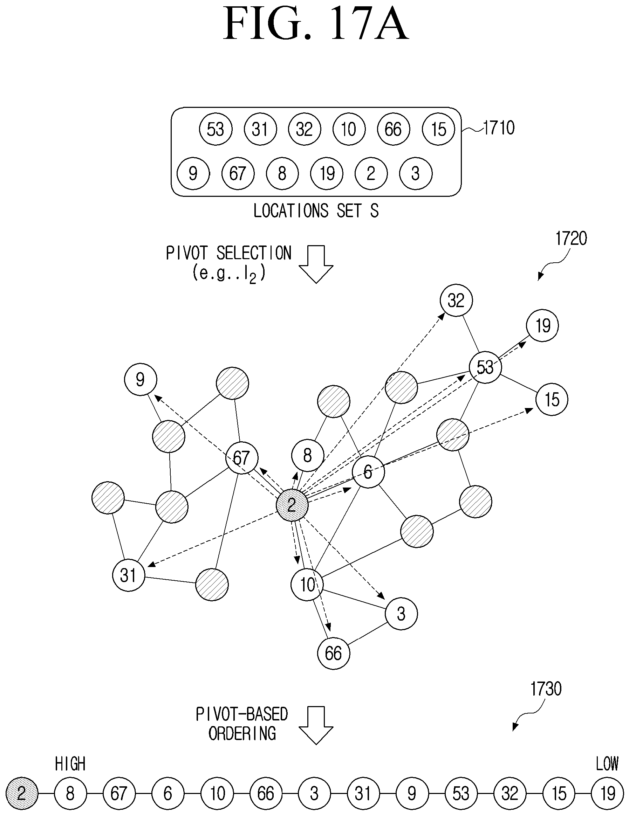

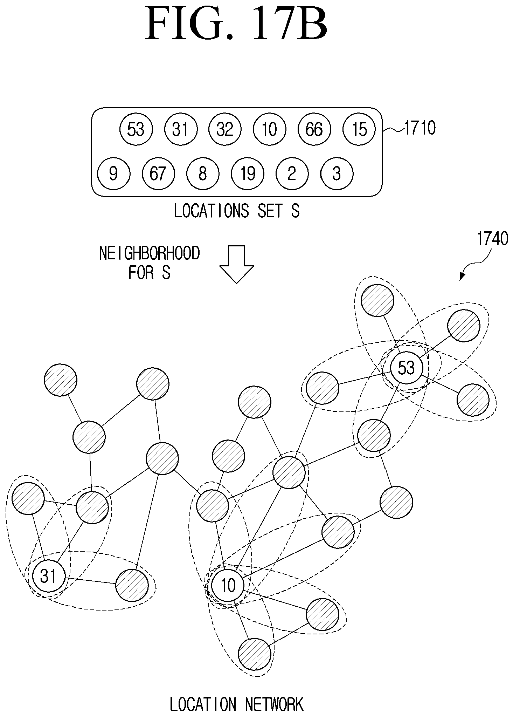

FIG. 17A is a diagram illustrating pivot-based ordered PoI information used in the masked language modeling model 1620. In addition, FIG. 17B is a diagram illustrating a geolocation network used in the contrastive objectives model 1630.

Referring to FIG. 17A, the server 100 may obtain a first place graph 1720 from a locations set 1710. Here, the first place graph 1720 is a graph in which each of places included in the locations set 1710 is configured as a node and nodes corresponding to close places are disposed to be close to each other based on distance information between the places. In addition, the server 100 may obtain sequence between places information 1730 based on the first place graph 1720. The sequence between places information 1730 is sequence information in which nodes located close to one node of the first place graph 1720 are disposed in sequence with respect to the corresponding node. The sequence between places information 1730 of FIG. 17A is a graph in which nodes close to a node 2 are connected in sequence based on the node 2. Such sequence between places information 1730 may be obtained for each node.

In addition, referring to FIG. 17B, the server 100 may obtain a second place graph (Geolocation Network) 1740 from the locations set 1710. Specifically, the second place graph (Geolocation Network) 1740 may be a graph in which each place included in the locations set 1710 is configured as a node and each node corresponding to a place close to a place corresponding to a specific node is connected based on the distance information between places. In other words, the sequence information 1730 of FIG. 17A may be information indicating relative distance information between places, and the second place graph (Geolocation Network) 1740 of FIG. 17B may be information indicating places close to the specific place.

In addition, returning to FIG. 16, the server 100 may input the sequence information 1730 of FIG. 17A to the masked language modeling model 1620, input the second place graph (Geolocation Network) 1740 of FIG. 17B to the contrastive obj ectives model 1630, and perform comparison training between the masked language modeling model 1620 and the contrastive objectives model 1630. Specifically, according to the disclosure, the comparison training may be a technology for training dependency between the sequence information 1730 and the second place graph (Geolocation Network) 1740. In addition, the pre-training for the next-location prediction model 1610 may be performed by transferring the information obtained through the comparison training to the next-location prediction model 1610.

The technologies disclosed in this disclosure should be interpreted to include all modifications, equivalents and/or alternatives of the embodiments of the disclosure. In relation to explanation of the drawings, similar reference numerals may be used for similar elements.

In this disclosure, the terms such as "comprise", "may comprise", "consist of', or "may consist of" are used herein to designate a presence of corresponding features (e.g., constituent elements such as number, function, operation, or part), and not to preclude a presence of additional features.

In this disclosure, expressions such as "A or B", "at least one of A [and/or] B,", or "one or more of A [and/or] B," include all possible combinations of the listed items. For example, "A or B", "at least one of A and B,", or "at least one of A or B" includes any of (1) at least one A, (2) at least one B, or (3) at least one A and at least one B. The expressions "first," "second" and the like used in the disclosure may denote various elements, regardless of order and/or importance, and may be used to distinguish one element from another, and does not limit the elements.

If it is described that a certain element (e.g., first element) is "operatively or communicatively coupled with/to" or is "connected to" another element (e.g., second element), it should be understood that the certain element may be connected to the other element directly or through still another element (e.g., third element). On the other hand, if it is described that a certain element (e.g., first element) is "directly coupled to" or "directly connected to" another element (e.g., second element), it may be understood that there is no element (e.g., third element) between the certain element and another element.

Also, the expression "configured to" used in the disclosure may be interchangeably used with other expressions such as "suitable for," "having the capacity to," "designed to," "adapted to," "made to," and "capable of," depending on cases. The expression "configured to" does not necessarily refer to a device being "specifically designed to" in terms of hardware. Instead, under some circumstances, the expression "a device configured to" may refer to the device being "capable of" performing an operation together with another device or component. For example, the phrase "a unit or a processor configured (or set) to perform A, B, and C" may refer, for example, and without limitation, to a dedicated processor (e.g., an embedded processor) for performing the corresponding operations, a generic-purpose processor (e.g., a central processing unit (CPU) or an application processor), or the like, that can perform the corresponding operations by executing one or more software programs stored in a memory device.

In this disclosure, the term "unit" or "module" may include a unit implemented with hardware, software, or firmware and may be interchangeably used with terms, for example, logic, logic blocks, parts, or circuits. The "unit" or the "module" may be a part integrally formed or a minimum unit or a part of the part performing one or more functions. For example, the module may be implemented as an application-specific integrated circuit (ASIC).

Various embodiments of the disclosure may be implemented as software including instructions stored in machine (e.g., computer)-readable storage media. The machine is an apparatus which invokes instructions stored in the storage medium and is operated according to the invoked instructions, and may include a laminated display apparatus according to the disclosed embodiments. In a case where the instruction is executed by a processor, the processor may perform a function corresponding to the instruction directly or using other elements under the control of the processor. The instruction may include a code made by a compiler or a code executable by an interpreter. The machine-readable storage medium may be provided in a form of a non-transitory storage medium. Here, the "non-transitory" storage medium is tangible and may not include signals, and it does not distinguish that data is semi-permanently or temporarily stored in the storage medium.

According to an embodiment, the methods according to various embodiments disclosed in this disclosure may be provided in a computer program product. The computer program product may be exchanged between a seller and a purchaser as a commercially available product. The computer program product may be distributed in the form of a machine-readable storage medium (e.g., compact disc read only memory (CD-ROM)) or distributed online through an application store (e.g., PlayStore^{™}). In a case of the on-line distribution, at least a part of the computer program product may be at least temporarily stored or temporarily generated in a machine-readable storage medium such as a memory of a server of a manufacturer, a server of an application store, or a relay server.

Each of the elements (e.g., a module or a program) according to various embodiments described above may include a single entity or a plurality of entities, and some sub-elements of the abovementioned sub-elements may be omitted or other sub-elements may be further included in various embodiments. Alternatively or additionally, some elements (e.g., modules or programs) may be integrated into one entity to perform the same or similar functions performed by each respective element prior to the integration. Operations performed by a module, a program, or other elements, in accordance with various embodiments, may be performed sequentially, in a parallel, repetitive, or heuristically manner, or at least some operations may be performed in a different order, omitted, or may add a different operation.

While the disclosure has been illustrated and described with reference to various example embodiments, it will be understood that the various example embodiments are intended to be illustrative, not limiting. One of ordinary skill in the art will understand that various changes in form and detail may be made without departing from the spirit and scope of the disclosure, including the appended claims and their equivalents.

## Claims

1. A method for controlling a server, the method comprising:
obtaining road information in a region having a predetermined range and information on a plurality of places in the region;
obtaining a region mobility graph corresponding to the region, based on movement information of at least one user between the plurality of places, the region mobility graph including a plurality of nodes corresponding to the plurality of places and an edge connecting the plurality of nodes;
learning the region mobility graph, by using a graph convolutional network (GCN) model for predicting a relationship between the plurality of nodes in the region mobility graph; and
providing the learned region mobility graph to an external apparatus.

2. The control method according to claim 1, further comprising:
obtaining a place mobility graph corresponding to the region, the place mobility graph including a plurality of first nodes corresponding to the plurality of places, respectively, and a first edge connecting the plurality of nodes, the place mobility graph further including the movement information of the at least one user between the plurality of places;
obtaining a road network graph including a plurality of second nodes corresponding to intersections and a second edge connecting the plurality of second nodes, based on the road information in the region; and
obtaining the region mobility graph based on the place mobility graph and the road network graph.

3. The control method according to claim 2, wherein the obtaining the region mobility graph comprises:
identifying, as a node of the region mobility graph, an area defined by the plurality of second nodes and the second edge of the road network graph; and
identifying, as an edge of the region mobility graph, movement information of the at least one user between a plurality of identified nodes and information on a physical distance between the plurality of identified nodes.

4. The control method according to claim 3, wherein each of the plurality of nodes comprises information on a place, with respect to at least one place located in an area corresponding to each of the plurality of nodes, as feature information, and
wherein the information on the place comprises location information of the place and category information corresponding to the place.

5. The control method according to claim 2, wherein the obtaining the region mobility graph comprises:
identifying, as a node of the region mobility graph, the plurality of second nodes of the road network graph; and
identifying, as an edge of the region mobility graph, movement information of the at least one user between a plurality of identified nodes and information on a physical distance between the plurality of identified nodes.

6. The control method according to claim 3, wherein each of the plurality of identified nodes comprises information on a place, with respect to at least one place related to a location corresponding to each of the plurality of identified nodes, as feature information.

7. The control method according to claim 1, wherein the learning comprises obtaining an embedding vector for predicting an edge included in the region mobility graph by learning the region mobility graph through the GCN model.

8. The control method according to claim 7, wherein the obtaining the embedding vector comprises obtaining the embedding vector by learning the region mobility graph by giving a weight to a physical distance between the plurality of nodes of the region mobility graph.

9. A server comprising:
a memory comprising at least one instruction; and
a processor configured to, by executing the at least one instruction:
obtain road information in a region having a predetermined range and information on a plurality of places in the region;
obtain a region mobility graph corresponding to the region, based on movement information of at least one user between the plurality of places, the region mobility graph including a plurality of nodes corresponding to the plurality of places and an edge connecting the plurality of nodes;
learn the region mobility graph, by using a graph convolutional network (GCN) model for predicting a relationship between the plurality of nodes in the region mobility graph; and
provide the learned region mobility graph to an external apparatus.

10. The server according to claim 9, wherein the processor is further configured to:
obtain a place mobility graph corresponding to the region, the place mobility graph including a plurality of first nodes corresponding to the plurality of places, respectively, and a first edge connecting the plurality of nodes, the place mobility graph further including the movement information of the at least one user between the plurality of places;
obtain a road network graph including a plurality of second nodes corresponding to intersections and a second edge connecting the plurality of second nodes, based on the road information in the region; and
obtain the region mobility graph based on the place mobility graph and the road network graph.

11. The server according to claim 10, wherein the processor is further configured to:
identify, as a node of the region mobility graph, an area defined by the plurality of second nodes and the second edge of the road network graph; and
identify, as an edge of the region mobility graph, the movement information of the at least one user between a plurality of identified nodes and information on a physical distance between the plurality of identified nodes.

12. The server according to claim 11, wherein each of the plurality of identified nodes comprises information on a place, with respect to at least one place located in an area corresponding to each of the plurality of identified nodes, as feature information, and
wherein the information on the place comprises location information of the place and category information corresponding to the place.

13. The server according to claim 10, wherein the processor is further configured to:
identify, as a node of the region mobility graph, the plurality of second nodes of the road network graph; and
identify, as an edge of the region mobility graph, movement information of the at least one user between a plurality of identified nodes and information on a physical distance between the plurality of identified nodes.

14. The server according to claim 11, wherein each of the plurality of identified nodes comprises information on a place, with respect to at least one place related to a location corresponding to each of the plurality of identified nodes, as feature information.

15. The server according to claim 9, wherein the processor is further configured to obtain an embedding vector for predicting an edge included in the region mobility graph by learning the region mobility graph through the GCN model.
